# EUROPÄISCHE PATENTSCHRIFT

(11) **EP 3 248 914 B1**
(45) Veröffentlichungstag und Bekanntmachung des Hinweises auf die Patenterteilung: **26.02.2020**
(21) Anmeldenummer: 17163845.5
(22) Anmeldetag: 30.03.2017
(51) Int. Cl.: B65G 47/71, B65G 11/02, B65G 11/20

(54) **RUTSCHE FÜR STÜCKGUT UND VERFAHREN ZUR VERWENDUNG EINER SOLCHEN RUTSCHE**
CHUTE FOR PIECE GOODS AND METHOD FOR USING SUCH A CHUTE
GLISSIÈRE POUR MARCHANDISE DE DÉTAIL ET PROCÉDÉ D'UTILISATION D'UNE TELLE GLISSIÈRE

(30) Priorität: 20.05.2016 DE 102016109313
(43) Veröffentlichungstag der Anmeldung: 29.11.2017
(73) Patentinhaber: Deutsche Post AG, 53113 Bonn (DE)
(72) Erfinder: Hartmann, Bernd, 53501 Grafschaft-Leimersdorf (DE); Grafe, Wolfram, 18107 Elmenhorst (DE)
(74) Vertreter: Cohausz & Florack

(56) Entgegenhaltungen:
- EP-A1- 0 521 541
- DE-A1- 3 612 076
- DE-A1- 4 017 128
- JP-A- 2001 315 928
- US-A- 3 841 461
- US-A- 6 095 314
- US-A1- 2016 101 957

## Beschreibung

### Gebiet

Die Erfindung betrifft eine Rutsche für Stückgut, mit einem Rutschenboden zum Herunterrutschen des Stückguts umfassend wenigstens zwei Rutschenbodenabschnitte, wobei die wenigstens zwei Rutschenbodenabschnitte einen Höhenversatz zwischen einander bilden, wobei wenigstens eine Leiteinrichtung zwischen den wenigstens zwei Rutschenbodenabschnitten zum Leiten des Stückguts von einem Rutschenbodenabschnitt zum nächsten Rutschbodenabschnitt vorgesehen ist und wobei die wenigstens eine Leiteinrichtung ein höhenverstellbares und in Richtung des nächsten Rutschenbodenabschnitts weisendes freies Ende aufweist. Ferner betrifft die Erfindung ein Verfahren zum Fördern von Stückgut entlang einer Rutsche der genannten Art.

### Hintergrund

Rutschen für Stückgut der genannten Art werden insbesondere zum Sortieren von Packstücken eingesetzt und als sogenannte Kastenrutschen ausgebildet. Dabei werden die Stückgüter in einer Sortiereinrichtung, einem sogenannten Sorter, nach festgelegten Kriterien in eine Mehrzahl von Rutschen sortiert. In den Rutschen rutschen die Stückgüter entlang des Rutschenbodens nach unten zum Ende der Rutsche, wo die Stückgüter solange in einem Auffangbereich zwischengelagert werden, bis die Stückgüter aus der Rutsche entnommen werden.

Der Sorter weist dabei in der Regel eine erhöht angeordnete Transporteinrichtung, etwa in Form eines Bandförderers oder eines Rollenförderers, auf, entlang der die Stückgüter transportiert werden, bis sie von der Transporteinrichtung in eine meist als Kastenrutsche ausgebildete Rutsche umgeleitet werden. Über die Rutsche wird der Höhenunterschied zum Sorter überwunden und werden die Stückgüter zur Seite transportiert, wo sie problemlos entnommen werden können. Zudem kann über die Rutsche eine größere Fläche zum Zwischenspeichern der Stückgüter bereitgestellt werden, als wenn die Stückgüter unmittelbar an der Transporteinrichtung zwischengespeichert würden.

Die in die Rutschen umgelenkten Stückgüter folgen entlang des Rutschenbodens oft einer identischen oder jedenfalls sehr ähnlichen Bahn, die in der Regel eine Kurvenbahn (Trajektorie) darstellt. Die gespeicherten Stückgüter reihen sich daher entlang der entsprechenden Bahn hintereinander auf. Um den durch die Rutsche bereitgestellten Platz besser auszunutzen und mehr Stückgüter in einer Rutsche aufnehmen zu können, werden die Rutschen oftmals kaskadenförmig ausgebildet. Dies bedeutet, dass wenigstens zwei Rutschenbodenabschnitte mit einem Höhenunterschied zwischen den beiden einander zugewandten Enden der Rutschenbodenabschnitte vorgesehen werden, der für die Stückgüter einen Sprung darstellt. Die Rutschenbodenabschnitte gehen also nicht ineinander über und sind auch nicht fluchtend zueinander angeordnet. Der Sprung sorgt dafür, dass sich die Stückgüter bedarfsweise zufällig übereinander stapeln und/oder bedarfsweise eine zufällige Richtungsänderung erfahren. Durch das Stapeln der Stückgüter können mehr Stückgüter auf kleinerem Raum zwischengespeichert werden. Die Richtungsänderung sorgt dafür, dass mehr Stückgüter nebeneinander im Auffangbereich der Rutsche zum Liegen kommen, was zu einer zusätzlichen Platzersparnis beiträgt. Gleichzeitig kommt es jedoch aufgrund des Sprungs der Stückgüter bei kaskadierten Rutschenböden immer wieder zu Beschädigungen der Stückgüter, insbesondere wenn es sich dabei um Packstücke handelt.

Um die Beschädigungen der Stückgüter zu verringern, werden bei einigen Rutschen Leiteinrichtungen zwischen einzelnen Rutschbodenabschnitten vorgesehen, die sich über die Breite des Rutschenbodens erstrecken und um eine horizontale Achse hoch und runter schwenken lassen. Eine hinreichende Transportgeschwindigkeit der Stückgüter wird sichergestellt, indem die Leiteinrichtung als sich in Längsrichtung des Rutschenbodens angetriebener Gurtförderer ausgebildet wird. Wenn die Packstücke gestapelt werden sollen, wird die Leiteinrichtung mit dem in Förderrichtung weisenden freien Ende nach oben geschwenkt, um die Stückgüter auf eine höhere Ebene anzuheben, so dass die Stückgüter auf bereits gespeicherten Stückgütern zum Liegen kommen. Auf diese Weise kann letztlich eine Kaskade nachgebildet und können Beschädigungen der Stückgüter vermieden werden.

Die zuvor beschriebene Rutsche und das ebenfalls zuvor beschriebene Verfahren kommen insbesondere zum Sortieren von Stückgütern unterschiedlicher Art in Frage. Die Stückguter können beispielweise Produkte oder Waren sein. Insbesondere handelt es sich um Packstücke, bei denen es sich um mit Packungen verpackte Stückgüter, wie Waren, Sendungen oder andere Güter handelt. Hierbei kann es sich auch um Schüttgut handeln.

Sendungen werden typischerweise bestimmten Adressaten zugestellt. Zudem handelt es sich bei Sendungen oftmals um Packstücke, also verpackte Stückgüter. Vor der Zustellung der Sendungen bei den Adressaten der Sendungen erfolgt vielfach eine Vorsortierung in einer Zustellbasis, etwa nach dem räumlichen Gebiet der Adressaten. Bei der Zustellbasis kann es sich beispielsweise um ein sogenanntes Paketzentrum, ein Warenlager oder dergleichen handeln. Die Sendungen können nach der Sortierung zugestellt oder aber weiter sortiert werden, was beispielsweise an einem anderen Ort erfolgen kann als die vorhergehende Sortierung. Die Zustellung kann an Adressaten der Sendungen oder bei entsprechenden Abgabestellen, wie beispielsweise Paketkästen oder Packstationen, bewirkt werden.

Als Stückgüter, Packstücke und/oder Sendungen werden vorliegend recht unterschiedliche Gegenstände angesehen, die vorzugsweise hinsichtlich ihrer Größe und ihres Gewichts mit überschaubarem Aufwand transportiert werden können. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können.

Unabhängig von der Art der Stückgüter besteht grundsätzlich ein steigendes Interesse an immer effektiveren und effizienteren Vorrichtungen und Verfahren zum Sortieren von Stückgütern, dem mit den bestehenden Lösungen nicht mehr zufriedenstellend Rechnung getragen werden kann.

Eine Rutsche der eingangs genannten Art ist beispielsweise aus der DE 36 12 076 A1 bekannt, welches eine Rutsche nach dem Oberbegriff des Anspruchs 1 offenbart. Zudem ist eine weitere Rutsche, die zwar nicht der vorgenannten Art entspricht aber dieser dennoch ähnlich ist, aus der JP 2001 315928 A bekannt.

### Zusammenfassung einiger beispielhafter Ausführungsformen der Erfindung

Der vorliegenden Erfindung liegt die Aufgabe zugrunde, die Rutsche und das Verfahren jeweils der eingangs genannten und zuvor näher erläuterten Art derart auszugestalten und weiterzubilden, dass die Effektivität der Sortierung insgesamt gesteigert werden kann.

Diese Aufgabe ist bei einer Rutsche nach dem Oberbegriff des Anspruchs 1 dadurch gelöst, dass die Fingerelemente eine flexible, die Zwischenräume zwischen den Fingerelementen überbrückende Materialbahn tragen und/oder dass die Fingerelemente wenigstens eine um jeweils wenigstens ein Fingerelement umlaufende und in Längsrichtung der Fingerelemente angetriebene Materialbahn aufweisen.

Ferner ist die Aufgabe gemäß Anspruch 12 gelöst durch ein Verfahren zum Fördern von Stückgütern entlang einer Rutsche nach einem der Ansprüche 1 bis 11
- bei dem die Stückgüter am unteren Ende der Rutsche zwischengespeichert werden,
- bei dem die Höhe der freien Enden wenigstens einzelner Fingerelemente während dem Zwischenspeichern der Stückgüter verstellt wird, um die Breite der Rutsche für das Speichern der Stückgüter bessern auszunutzen, um zu speichernde Stückgüter übereinander zu stapeln und/oder um die Fallhöhe der Stückgüter von einem Rutschenbodenabschnitt zum nächsten Rutschenbodenabschnitt zu mindern.

Die Erfindung hat erkannt, dass die Stückgüter entlang des Rutschenbodens sehr viel zielgerichteter geleitet werden können, wenn die Leiteinrichtung mit einer Mehrzahl von quer zum Rutschenboden nebeneinander angeordneten Fingerelementen versehen wird, die gegeneinander höhenverstellbar ausgebildet sind. Die freien Enden benachbarter Fingerelemente, die das freie Ende der Leiteinrichtung bilden oder diesem zugeordnet sein können, können also in einer unterschiedlichen Höhe angeordnet werden. So kann die Leiteinrichtung zielgerichtet durch die Verstellung der Finger gegeneinander und gegen den Rutschenboden so ausgebildet werden, dass die Stückgüter in der gewünschten Weise von einem Rutschenbodenabschnitt zum nachfolgenden Rutschenbodenabschnitt geleitet werden. Dies kann beispielweise bedeuten, dass die zu speichernden Stückgüter in unterschiedlichem Maße quer zum Rutschenboden bewegt werden. Dann wird die Breite der Rutsche bzw. die Breite des Auffangbereichs am Ende der Rutsche besser ausgenutzt, um dort mehr Stückgüter zu speichern. Den Stückgütern kann beispielsweise eine Bewegungskomponente quer zum Rutschenboden aufgeprägt werden, wenn sich die Stückgüter über eine zum Rutschenboden quer geneigte Fläche bewegen, was wiederum durch unterschiedlich weit angehobene Fingerelemente in diesem Bereich der Leiteinrichtung erreicht werden kann. Werden alle Fingerelemente gleich weit angehoben, so dass die Leiteinrichtung überall gleichmäßig angehoben ist, neigt sich die Leiteinrichtung nicht quer zum Rutschenboden, sondern um eine horizontale Achse.

Die Fingerelemente können aber auch so verstellt werden, dass die Stückgüter auf andere Packstücke gelangen und dort zum Liegen kommen. So können Stückgüter in verschiedenen Lagen übereinander oder als zufällig angeordneter Haufen gespeichert werden, was sehr platzsparend ist. Zudem können die Fingerelemente gerade soweit verstellt werden, wie es für das Stapeln von Stückgütern auf bereits vorhandenen Stückgütern erforderlich ist. Dies kann beispielsweise bedeuten, dass Stückgüter durch die Fingerelemente umso weiter angehoben werden, je höher die Stückgüter sind, auf denen die hinzukommenden Stückgüter gestapelt werden sollen. Dies erlaubt letztlich ein platzsparendes Stapeln der Stückgüter bei allenfalls sehr geringen Beschädigungen der Stückgüter.

Die Leiteinrichtung kann auch dazu genutzt werden, die Fallhöhe der Packstücke von einem Rutschenbodenabschnitt zum nächsten Rutschenbodenabschnitt zu mindern. Dies kann dann der Fall sein, wenn die Rutschenbodenabschnitte kaskadenartig angeordnet sind. Ist beispielsweise am unteren Ende einer Stufe der Kaskade kein Stückgut vorgesehen, kann die Leiteinrichtung in eine Stellung gebracht werden, die einen sachten Übergang des Stückguts von einem Rutschenbodenabschnitt zum nächsten Rutschenbodenabschnitt erlaubt. Da die Fingerelemente unabhängig voneinander höhenverstellbar sind, können die Finger an anderer Stelle gleichzeitig in anderer Höhe angeordnet sein, etwa um dort ein weiteres Stückgut auf ein bereits vor der Stufe der Kaskade positioniertes Stückgut zu leiten.

Durch die mehreren unabhängig voneinander höhenverstellbaren Finger wird eine erhebliche Flexibilität bereitgestellt, mit der die Leiteinrichtung auf die Bewegung der zu speichernden Stückgüter einwirken kann, um das Sortieren insgesamt effektiver zu gestalten. Zudem können die Fingerelemente in unterschiedlichen Abschnitten der Leiteinrichtung unterschiedlich weit angehoben sein, um die Stückgüter in den unterschiedlichen Abschnitten in unterschiedliche Richtungen zu leiten. Dabei müssen die Fingerelemente nicht völlig unabhängig voneinander verstellbar sein. Jedenfalls sind die Fingerelemente hinsichtlich ihrer Höhenverstellbarkeit nicht zwangsgekoppelt, in dem Sinne, dass ein Fingerelement immer die gleiche relative Position zu einem anderen, insbesondere zu einem benachbarten Fingerelement aufweisen muss, oder in dem Sinne, dass die Stellung eines Fingers durch die Stellung eines anderen Fingers, insbesondere eines benachbarten Fingers, exakt vorgegeben ist. Gleichzeitig kann es jedoch so sein, dass die Fingerelemente abgestimmt aufeinander höhenverstellbar sein können. So kann beispielsweise ein gleitender Verlauf anstelle eines eher chaotischen Verlaufs der Fingerelemente quer zur Leiteinrichtung erreicht werden, was grundsätzlich bevorzugt sein wird, und zwar umso mehr, je mehr Fingerelemente vorgesehen sind.

In vielen Fällen wird es umso zweckmäßiger sein, je dünner die Fingerelemente ausgebildet sind. Dies gilt insbesondere für kleine Stückgüter. Beispielsweise können Fingerelemente in der Größe menschlicher Finger bevorzugt sein. Zudem werden die Fingerelemente über die gesamte Breite der Rutsche angeordnet bzw. verteilt, wobei die Breite und/oder die Länge der jeweiligen Rutsche an die Größe der zu sortierenden Stückgüter oder andere Parameter angepasst sein kann.

Nachfolgend werden der besseren Verständlichkeit halber und zur Vermeidung unnötiger Wiederholungen die Rutsche und das Verfahren jeweils der eingangs genannten und zuvor näher beschriebenen Art gemeinsam beschrieben, ohne stets im Einzelnen sprachlich zwischen der Rutsche und dem Verfahren zu unterscheiden. Dem Fachmann ist jedoch anhand des Kontextes jeweils ersichtlich, welche Merkmale hinsichtlich der Rutsche und hinsichtlich des Verfahrens bevorzugt sind.

Bei einer ersten besonders bevorzugten Ausgestaltung der Rutsche sind die freien Enden der Fingerelemente auf unterschiedlichen Höhen angeordnet. So kann auf unterescheidliche Gegebenheiten an unterschiedlichen Stellen der Leiteinrichtung reagiert werden, so dass die Stückgüter an den unterschiedlichen Stellen von der Leiteinrichtung möglichst günstig an den nächsten Rutschenbodenabschnitt weitergeleitet werden können und/oder um eine quer zum Rutschenboden geneigte Fläche bereitzustellen, um über diese Fläche einem Stückgut eine Bewegungskomponente quer zum Rutschenboden aufprägen zu können. Dabei kann es zu einer geeigneten und/oder gleichmäßigen Führung von Stückgütern durch die Leiteinrichtung ganz grundsätzlich bevorzugt sein, wenn die Leiteinrichtung quer zum Rutschenboden infolge der in unterschiedlicher Höhe positionierten freien Enden der Fingerelemente wellenförmig angeordnet ist. Alternativ oder zusätzlich können die freien Enden der Fingerelemente quer zum Rutschenboden abschnittsweise in einer unteren Stellung abschnittsweise in einer oberen Stellung und/oder abschnittsweise in einer Stellung zwischen der unteren Stellung und der oberen Stellen angeordnet sein. Letzteres gilt insbesondere aber nicht ausschließlich für den Fall, dass sich zu einer Seite des entsprechenden Abschnitts ein Abschnitt mit Fingerelementen in der oberen Stellung und zur gegenüberliegenden Seite ein Abschnitt mit Fingerelementen in der unteren Stellung anschließt. So kann beispielsweise eine Wellenform bereitgestellt werden. Grundsätzlich kann aber auch jeder Abschnitt anders ausgerichtet werden, um den dortigen Gegebenheiten hinsichtlich einer geeigneten Leitung der Stückgüter Rechnung zu tragen.

Um eine hohe Flexibilität bei der Verstellung der Leiteinrichtung insgesamt bereitstellen zu können und auch geringfügige Modifikationen hinsichtlich der Leitung der Stückgüter durch die Leiteinrichtung vornehmen zu können, bietet es sich bedarfsweise an, wenn die freien Enden der Fingerelemente, insbesondere jeweils, zwischen einer unteren Stellung und einer oberen Stellung wenigstens im Wesentlichen stufenlos verstellbar sind.

Um das Herabrutschen von Stückgütern entlang der Leiteinrichtung bedarfsweise nicht oder nicht nennenswert zu beeinflussen, kann es zweckmäßig sein, wenn die freien Enden wenigstens bestimmter Fingerelemente für den Fall, dass diese sich in einer unteren Stellung befinden, wenigstens in etwa auf der Höhe des nächsten Rutschenbodenabschnitt angeordnet sind. Dabei versteht sich die Höhe des nächsten Rutschenbodenabschnitts insbesondere als die Höhe des Beginns des nächsten Rutschenbodenabschnitts und/oder die Höhe des nächsten Rutschenbodenabschnitts im Bereich der freien Enden der entsprechend angeordneten Fingerelemente. Auf die genannte Weise kann etwa ein gleichmäßiger Übergangs der Neigung des Rutschenbodens von einem Rutschenbodenabschnitt zum nächsten Rutschenbodenabschnitt bereitgestellt werden. Alternativ oder zusätzlich können obere Stellungen der freien Enden von wenigstens bestimmten Fingerelementen vorgesehen sein, die wenigstens in einem bestimmten Abstand oberhalb des nächsten Rutschenbodenabschnitts angeordnet sind. Der bestimmte Abstand kann dabei abhängig sein von der Ausgestaltung der Rutsche und/oder der Größe der Stückgüter. Dabei versteht sich auch hier die Höhe des nächsten Rutschenbodenabschnitts insbesondere als die Höhe des Beginns des nächsten Rutschenbodenabschnitts und/oder die Höhe des nächsten Rutschenbodenabschnitts im Bereich einer an den freien Enden der entsprechenden Fingerelemente angreifenden Vertikalen. Auf die entsprechende Weise kann ein Stapeln der nacheinander die Rutsche herunterrutschender Stückgüter erreicht werden, und zwar insbesondere dann wenn Stückgüter auf andere Stückgüter gestapelt werden deren. Die Höhe der Stückgüter sollte dann einen bestimmten Wert nicht übersteigen, um ein Stapeln der Stückgüter in einer gegebenen Rutsche zu ermöglichen. Welche Höhe dabei nicht überschritten werden sollte hängt wiederum von der jeweiligen Ausgestaltung der Rutsche ab.

Besonders bevorzugt hinsichtlich der Verstellbarkeit der Fingerelemente ist es, wenn die Fingerelemente jeweils wenigstens zwei sich gemeinsam in Längsrichtung des Fingerelements bis zum freien Ende des Fingerelements erstreckende flexible Flankenelemente aufweisen, wobei die flexiblen Flankenelemente vorzugsweise in Längsrichtung der Fingerelemente jeweils über eine Mehrzahl von Stegen flexibel miteinander verbunden sind. Auf diese Weise können die freien Enden der Fingerelemente einfach von einer unteren Stellung in eine obere Stellung und zurück verstellt werden. Die Fingerelemente können zudem den sogenannten Fin Ray Effekt nutzen, der bei Schwanzflossen von Knochenfischen beobachtet wurde. Drückt man mit dem Finger seitlich gegen sie, krümmen sich die Flossen infolge des Fin Ray Effekts nicht weg, sondern sie biegen sich dem Finger entgegen. Möglich wird dies durch den speziellen Aufbau der Flossen, die durch die Fingerelemente in der vorbeschriebenen Ausgestaltung nachgebildet wird.

Dazu weisen die Fingerelemente wenigstens zwei sich gemeinsam von einem Ende des Fingerelements zu einem gegenüberliegenden Ende des Fingerelements erstreckende flexible Flankenelemente auf. Die Flexibilität der Flankenelemente kann beispielsweise durch elastische Flankenelemente oder durch eine Gliederkette aus schwenkbar oder gelenkig miteinander verbundenen starren Kettengliedern bereitgestellt werden. Dabei wird eine entsprechende Flexibilität lediglich in eine Raumrichtung gefordert. In den Raumrichtungen senkrecht dazu ist eine Flexibilität nicht zwingend erforderlich. Daher können die Flankenelemente auch problemlos beispielsweise streifenförmig ausgebildet werden, wobei sich in der Ebene des Streifens eine erhöhe Biegesteifigkeit ergeben kann. Alternativ ist aber auch eine stabförmige Ausgestaltung der Flankenelemente möglich. Die entsprechende Flexibilität der Flankenelemente erlaubt letztlich eine Krümmung der Fingereinheit ausgehend von einer gestreckten Stellung in eine gekrümmte Stellung beispielsweise ähnlich der Krümmung eines Fingers, insbesondere nach oben oder nach unten.

Damit die Krümmung der Fingerelemente in eine Richtung beispielsweise durch einen Druck gegen die Fingereinheit, insbesondere gegen ein Flankenelement, in die entgegengesetzte Richtung ausgelöst werden kann, sind die wenigstens zwei Flankenelemente zwischen den beiden Enden der Fingerelemente über eine Mehrzahl von Stegen jeweils flexibel miteinander verbunden. Dabei können die Stege starr ausgebildet und schwenkbar oder gelenkig mit den Flankenelementen verbunden sein. Es können aber, bedarfsweise alternativ zu schwenkbaren oder gelenkigen Verbindungen zu den wenigstens zwei Flankenelementen, auch flexible, insbesondere elastische Stege verwendet werden. Auf diese Weise wird erreicht, dass sich die Stege gegenüber den wenigstens zwei Flankenelementen geschwenkt werden können, um so eine Krümmung des Fingerelements zu ermöglichen.

Der Aufbau der Fingerelemente erlaubt gegebenenfalls eine Krümmung derselben, wenn etwa ein Stückgut auf ein Fingerelement drückt. Die Fingerelemente können aufgrund ihres Aufbaus aber insbesondere gezielt gekrümmt werden, was zur einem Anheben bzw. Absenken des freien Endes der Fingerelemente führt, ohne dass es dazu eines Kontakts etwa mit einem Stückgut bedarf. Die Krümmung bzw. Verstellung der Fingerelemente, wobei insbesondere das Anheben und das Absenken der freien Enden der Fingerelemente im Fokus steht, erfolgt beispielsweise indem die Flankenelemente in Längsrichtung der entsprechenden Fingerelemente gegeneinander verstellt werden. Die Form der Fingerelemente ergibt sich dann zwangsweise, und zwar insbesondere abhängig von der Verbindung der Flankenelemente untereinander über die Stege dazwischen. In einer einfachen Ausgestaltung können die Flankenelemente in einer Stellung eines Fingerelements spiegelsymmetrisch und/oder die Stege parallel zueinander ausgerichtet sein.

Um die Fingerelemente beispielsweise nicht nur in einer Ebene verstellen zu können, können die Fingerelemente beispielsweise auch drei oder mehr Flankenelemente aufweisen, die untereinander über Stege verbunden sind. Eine Verstellbarkeit der Fingerelemente in einer Richtung, nämlich insbesondere der vertikalen Richtung, wird jedoch im Regelfall ausreichend sein.

Um eine geeignete Beweglichkeit und damit die Verstellbarkeit der Fingerelemente sicherstellen zu können, bietet es sich an, wenn die Stege und die zugehörigen flexiblen Flankenelemente zu einer Seite einen spitzen Winkel von vorzugsweise zwischen 10° und 80° und zur anderen Seite einen stumpfen Winkel von vorzugsweise zwischen 100° und 170° bilden. Rechte Winkel können dagegen die Verstellbarkeit der Fingerelemente behindern oder einschränken.

Um die Fingerelemente verstellen und dabei die freie Enden der Fingerelemente in gewünschter Weise anheben und wieder absenken zu können, können die flexiblen Flankenelemente der Fingerelemente jeweils in Längsrichtung der Fingerelemente gegeneinander verstellbar sein. Um die Fingerelemente möglichst unabhängig voneinander verstellen zu können, bietet es sich an, wenn die Flankenelemente unterschiedlicher Fingerelemente unterschiedlich verstellt werden können. Die Verstellung der Flankenelemente erfolgt vorzugsweise mit einer entsprechenden Antriebseinrichtung die in der gewünschten Weise angesteuert werden kann, um die gewünschte Stellung der Fingerelemente sicherzustellen. Bedarfsweise kann die separate Verstellung der Fingerelemente einfach erreicht werden, indem den verschiedenen Fingerelementen wenigstens teilweise separate Antriebseinrichtungen zugeordnet werden.

Damit die Anzahl an Fingerelementen für eine Leiteinrichtung überschaubar bleibt und die Fingerelemente nicht besonders breit ausgebildet werden müssen, sind die Fingerelemente bei einer erfindungsmäßen Alternative mit einer flexiblen Materialbahn überdeckt, die auch die Zwischenräume zwischen den Fingerelementen überdeckt. Kleine oder spitze Stückgüter können so nicht versehentlich in die Zwischenräume zwischen den Fingerelementen gelangen. Die Materialbahn kann grundsätzlich aus unterschiedlichen Materialien bereitgestellt werden. Auf glatten Materialien können die Stückgüter problemlos abgleiten und auf rauen Materialien bedarfsweise gebremst werden. Die Gleitreibung kann durch die Wahl der entsprechenden Materialpaarungen bedarfsweise eingestellt werden. Zudem kann die Flexibilität der Materialbahn nicht bloß durch das verwendete Material und dessen Dicke sichergestellt werden. Es können auch flexible Verbindungen zwischen Abschnitten der Materialbahn vorgesehen sein, die beispielsweise als Scharniere ausgebildet sein können. Wenn quer zum Rutschenboden Fingerelemente bzw. deren freie Enden in verschiedenen Höhen nebeneinander angeordnet sind, kann so erreicht werden, dass die Materialbahn diesem Höhenunterschied wenigstens im Wesentlichen folgt.

Alternativ oder zusätzlich ist bei einer weiteren erfindungsmäßen Alternative um jeweils wenigstens ein Fingerelement eine umlaufende, bedarfsweise angetriebene, Materialbahn vorgesehen sein. Die Materialbahn kann dann ähnlich eines Gurts eines Gurtförderers ausgebildet sein und bedarfsweise ebenso entlang des wenigstens einen zugehörigen Fingerelements gehalten sein. Die Materialbahn ist angetrieben, und zwar in Längsrichtung der Fingerelemente, etwa so dass die Materialbahn auf den Fingerelementen in Richtung der freien Enden bewegt wird, können die Stückgüter beim Passieren der Materialbahn beschleunigt oder gebremst werden. Dabei spielt natürlich auch die Haftreibung und die Gleitreibung der jeweiligen Materialpaarungen von Stückgut und Materialbahn eine Rolle. Im Falle einer umlaufenden Materialbahn kann diese nur von einem Fingerelement oder aber auch von mehreren Fingerelementen getragen werden, wobei die Materialbahn dann, wie zuvor bereits beschrieben worden ist, die Zwischenräume zwischen den Fingerelementen verschließen kann. Mit anderen Worten können einzelne Fingerelemente oder eine Mehrzahl von Fingerelementen als Gurtförderer bzw. Tragstruktur eines Gurtförderers ausgebildet sein.

Um die Fingerelemente so zu verstellen, wie es für die jeweilige Betriebssituation besonders zweckmäßig ist, kann wenigstens ein, vorzugsweise optischer, Sensor zum Erfassen der jeweiligen Betriebssituation vorgesehen werden. Die Betriebssituation wird dabei etwa von der Anzahl und/oder der Art einzelner gespeicherter Stückgüter, von der Lage einzelner gespeicherter Stückgüter, von den Abmessungen einzelner gespeicherter Stückgüter, von der Anordnung eines Haufens gespeicherter Stückgüter und/oder von der Form eines Haufens gespeicherter Stückgüter charakterisiert. Dieser oder diese Parameter werden daher vorzugsweise erfasst und können zur Ansteuerung bzw. der Verstellung der Fingerelemente einer Leiteinrichtung herangezogen werden. Wenn beispielsweise die Anzahl der gespeicherten Stückgüter erfasst wird, lässt sich darauf schließen, wie die bereits gespeicherten Stückgüter am Ende der Rutsche angeordnet sind. Diese Information kann genutzt werden, um die nachfolgenden Stückgüter durch Verstellen der Leiteinrichtung in eine bestimmte Richtung zu leiten, etwa um den zur Speicherung der Stückgüter zur Verfügung stehenden Platz besser auszunutzen oder Beschädigungen beim Fördern der Stückgüter zu vermeiden. Wenn zusätzlich die Art, also beispielsweise die Form oder die Größe, der Stückgüter erfasst wird, kann in der Regel noch besser auf die Anordnung der am Ende der Rutsche gespeicherten Stückgüter geschlossen werden. Es versteht sich, dass beispielsweise auch berücksichtigt werden kann, wenn alle oder nur einige Stückgüter aus der Rutsche entnommen werden. Das Entnehmen von Stückgütern aus der Rutsche kann ebenfalls über einen, insbesondere optischen, Sensor erfasst werden. Die entsprechende Information kann auch auf andere Weise, insbesondere zur Weiterverarbeitung derselben, bereitgestellt werden. Bedarfsweise kann es auch ausreichend, lediglich die Art der Stückgüter zu erfassen. Zudem kann dann insbesondere die verstrichenen Zeit oder eine auf andere Art bereitgestellte Information über die Anzahl der Stückgüter genutzt werden, um auf die Anordnung der gespeicherten Stückgüter in der Rutsche zu schließen. Bedarfsweise kann auch gezielt die Lage einzelner gespeicherter Stückgüter und/oder die Abmessungen einzelner gespeicherter Stückgüter durch den Sensor erfasst werden. Dabei sind dann insbesondere die vor der entsprechenden Leiteinrichtung angeordneten Stückgüter von besonderem Interesse. Grundsätzlich kann der Sensor aber auch einen Haufen von Stückgütern erfassen, und zwar insbesondere die Anordnung eines Haufens gespeicherter Stückgüter und/oder die Form eines Haufens gespeicherter Stückgüter. Auch dann kann zweckmäßiger Weise entschieden werden, wohin weitere Stückgüter geleitet werden sollten, um danach die Fingerelemente der Leiteinrichtung einzustellen.

Damit die Höhe der freien Enden der Fingerelemente zielgerichtet und nach vorgegebenen Kriterien, insbesondere auch reproduzierbar, eingestellt werden kann, bietet sich die Verwendung einer Stelleinrichtung an Die Stelleinrichtung kann die Fingerelemente zeitabhängig, abhängig von der Anzahl und/oder Art einzelner gespeicherter Packstücke und/oder abhängig von wenigstens einem von dem Sensor erfassten Parameter einstellen bzw. verstellen. Hierzu ist es der Einfachheit halber bevorzugt, wenn die Stelleinrichtung die Fingerelemente anhand wenigstens eines Signals verstellt, das von dem Sensor zum Erfassen der entsprechenden Parameter an die Stelleinrichtung übermittelt wird.

Um eine möglichst flexible oder genaue Leitung der Stückgüter mittels der Leiteinrichtung erreichen zu können, können mehrere Fingerelemente von einem Handelement getragen werden, das bevorzugt seinerseits höhenverstellbar ausgebildet ist. Dabei können die in einer Leiteinrichtung vorgesehenen Fingerelemente unterschiedlichen Handelementen zugeordnet sein. Wenn das wenigstens eine Handelement gegenüber dem Rutschenboden verstellbar ist, können die an dem Handelement gehaltenen Fingerelemente gemeinsam über das Handelement verstellt, insbesondere angehoben, abgesenkt oder geschwenkt werden. Zudem können die Fingerelemente, insbesondere die freien Enden der Fingerelemente, eines Handelements gegeneinander verstellt, beispielweise angehoben und/oder gekrümmt werden. Auf die beschriebene Weise wird beispielsweise der Verstellbereich der Fingerelemente vergrößert, um die Fingerelemente besonders effektiv und zielgerichtet einsetzen zu können. Dies kann bedarfsweise noch dadurch gesteigert werden, dass das wenigstens eine Handelement, an dem eine Mehrzahl von Fingerelementen festgelegt ist, an einem Armelement festgelegt ist, das seinerseits höhenverstellbar angeordnet sein kann. Die Höhenverstellbarkeit kann sich beispielsweise darin äußern, dass das Armelement rauf und runter bewegt und/oder gegen den Rutschenboden geschwenkt werden kann.

Für das Zwischenspeichern von Stückgut in der Rutsche kann am unteren Ende der Rutsche ein Auffangbereich für Stückgut vorgesehen sein. In dem Auffangbereich kann das Stückgut sich dann ansammeln. Die Leitung von Stückgut über die Leiteinrichtung kann bedarfsweise erst dann erfolgen, wenn sich der Auffangbereich wenigstens teilweise gefüllt hat und beispielswiese die Stückgüter bis in die Nähe der Leiteinrichtung zurückreichen.

Verfahrensmäßig kann die Höhe der freien Enden wenigstens einzelner Fingerelemente nach unterschiedlichen Kriterien eingestellt werden. Bevorzugt erfolgt dies jedoch nach mehr oder weniger exakt vorgegebenen Parametern. Die Verstellung der Fingerelemente kann beispielsweise zeitabhängig erfolgen. Je mehr Zeit verstreicht, desto mehr Stückgüter werden am Ende der Rutsche zwischengespeichert, jedenfalls solange die Stückgüter nicht zum Teil oder gar vollständig aus der Rutsche entfernt werden. Zusätzlich oder alternativ kann das Verstellen der Fingerelemente aber auch abhängig von der Anzahl und/oder der Art einzelner gespeicherter Stückgüter erfolgen. Die Anzahl und die Art der Stückgüter, wobei insbesondere die Größe und die Form der Stückgüter gemeint sein können, lassen Rückschlüsse auf die Anordnung der gespeicherten Stückgüter in der Rutsche zu. Man kann stattdessen oder auch ergänzend die Lage und/oder die Abmessungen einzelner gespeicherter Stückgüter erfassen, und zwar insbesondere die Abmessungen die für die Leitung weiterer Stückgüter von besonderem Interesse sind. Der Einfachheit halber können die Stückgüter in Transportrichtung hinter der wenigstens einen Leiteinrichtung der Verstellung der Fingerelemente zugrunde gelegt werden. Bedarfsweise kann aber auch die Anordnung und/oder die Form eines Haufens von Stückgütern als Kriterium herangezogen werden, das über die Verstellung der Fingerelemente bestimmt. Letzteres lässt besonders exakte Rückschlüsse darauf zu, wie die noch zu speichernden Stückgüter mittels der wenigstens einen Leiteinrichtung geleitet werden sollten, um die Speicherung der Stückgüter in gewünschter Weise zu beeinflussen.

Um die der Verstellung der Fingerelemente der wenigstens einen Leiteinrichtung zugrunde gelegten Parameter einfach, kostengünstig und zuverlässig bereitstellen zu können, bietet sich die Verwendung wenigstens eines Sensors an, der den wenigstens einen Parameter ermittelt. Besonders zweckmäßig für die Erfassung und Auswertung des wenigstes einen Parameters ist die Verwendung wenigstens eines optischen Sensors. Der Sensor kann wahlweise die Anzahl und/oder die Art einzelner gespeicherter Stückgüter, die Lage einzelner gespeicherter Stückgüter, die Abmessungen einzelner gespeicherter Stückgüter, die Anordnung eines Haufens gespeicherter Stückgüter und/oder die Form eines Haufens gespeicherter Stückgüter erfassen. Steuerungstechnisch einfach lässt sich das Verfahren verwirklichen, wenn der wenigstens eine Sensor ein Signal mit dem wenigstens einen zu ermittelnden Parameter korrelierendes Signal ausgibt, das an eine Stelleinrichtung zum Verstellen der Höhe der freien Enden der Fingerelemente abhängig von dem Signal weitergegeben werden kann.

Nachfolgend wird die Erfindung anhand einer lediglich Ausführungsbeispiele darstellenden Zeichnung näher erläutert. In der Zeichnung zeigt
- Fig. 1: ein Detail einer ersten Sortiereinrichtung mit einer ersten erfindungsgemäßen Rutsche in einer perspektivischen Schnittansicht,
- Fig. 2: ein Detail einer Leiteinrichtung der Rutsch aus Fig. 1 in einer perspektivischen Schnittansicht,
- Fig. 3: das Detail der Sortiereinrichtung gemäß Fig. 1 in einer Draufsicht,
- Fig. 4: ein Detail einer zweiten Sortiereinrichtung mit einer zweiten erfindungsgemäßen Rutsche in einer perspektivischen Schnittansicht,
- Fig.5: ein Fingerelement einer Leiteinrichtung einer erfindungsgemäßen Rutsche in einer perspektivischen Seitenansicht,
- Fig. 6A-C: die Höhenverstellung des Fingerelements aus Fig. 5 in einer perspektivischen Seitenansicht und
- Fig. 7: ein alternatives Fingerelement einer Leiteinrichtung einer erfindungsgemäßen Rutsche in einer perspektivischen Seitenansicht.

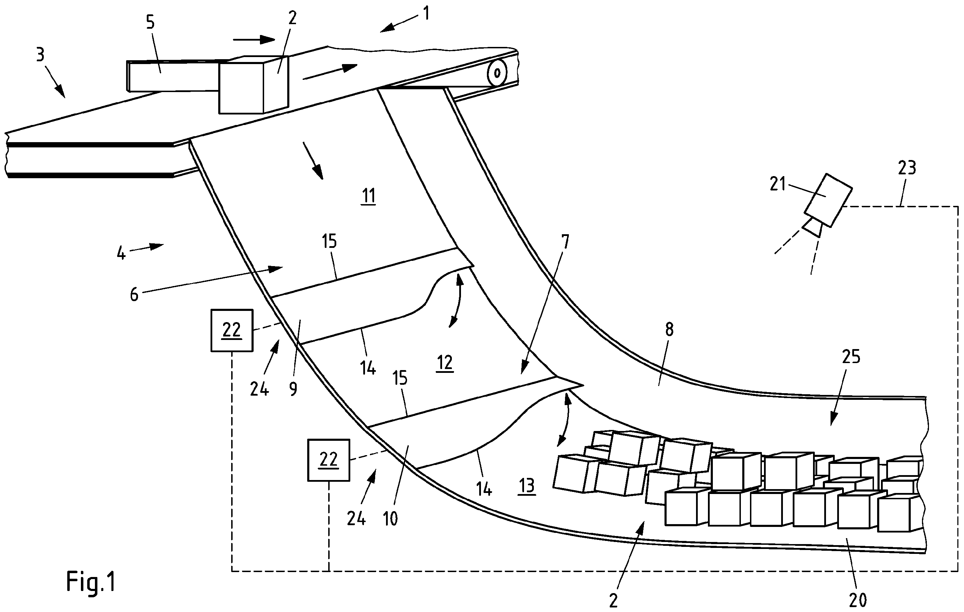

In der Fig. 1 ist ein Detail einer Sortiereinrichtung 1, eines sogenannten Sorters, zum Sortieren von Stückgütern 2, insbesondere in Form von Packstücken, dargestellt. Bei den Packstücken handelt es sich zudem insbesondere um Paketsendungen, also vornehmlich um Pakete und Päckchen zum Versand an Adressaten. Die Sortiereinrichtung 1 ist Teil einer Zustellbasis, in der Paketsendungen angeliefert, sortiert und nach dem Sortieren gruppiert weitertransportiert werden, um letztlich die Zustellung der Stückgüter 2 beim Adressaten zu bewirken. Alternativ kann es ich aber auch um ein Warenlager handeln, in dem Stückgüter 2 in Form von Waren sortiert werden, um gemeinsam an einen anderen Ort transportiert zu werden. Die Sortiereinrichtung 1 kann aber auch wenigstens einer Produktionsanlage nachgeschaltet sein, um die produzierten Produkte für eine nachfolgende Verwendung derselben zu sortieren.

Das zu sortierende Stückgut 2 wird über eine Transporteinrichtung 3, bei der es sich im dargestellten und insoweit bevorzugten Fall um einen Gurtförderer handelt, herantransportiert. Die Transporteinrichtung 3 erstreckt sich entlang einer Mehrzahl von Rutschen 4, wobei jede Rutsche 4 für bestimmte Stückgüter 2 oder Klassen von Stückgütern 2 vorgesehen ist. Über eine nicht dargestellte aber an sich hinreichend bekannte Einrichtung wird ermittelt, um welches Stückgut 2 oder welche Art Stückgut 2 es sich jeweils handelt, um zu entscheiden, in welche Rutsche 4 das jeweilige Stückgut 2 zu leiten ist. Befindet sich das Stückgut 2 auf Höhe der entsprechenden Rutsche 4 wird das Stückgut 2 von einer Sortiereinrichtung 1 in die Rutsche 4 geleitet. Bei der dargestellten Sortiereinrichtung 1 sind zum Zuführen des Stückguts 2 zu einer Rutsche 4 schwenkbare Klappen 5 vorgesehen, die über der Transporteinrichtung 3 in eine Position schräg zur Transportrichtung der Stückgüter 2 geschwenkt werden können und dabei die Stückgüter 2 in die entsprechenden Rutschen 4 stoßen oder leiten.

Die Rutschen 4 weisen einen geneigten Rutschenboden 6 auf, der die Rutschfläche 7 bereitstellt, auf der die Stückgüter 2 entlang der Rutsche 4 nach unten rutschen. Der Rutschenboden 6 ist bei der dargestellten und insoweit bevorzugten Rutsche 4 aus einem metallischen Werkstoff gebildet. Ferner handelt es sich bevorzugt um eine sogenannte Kastenrutsche, bei denen seitlich zum Rutschenboden 6 zu beiden Seiten des Rutschenbodens 6 je eine Seitenwange 8 vorgesehen ist, die ein versehentliches seitliches Herunterfallen von Stückgütern 2 von der Rutsche 4 verhindert. Bei der dargestellten und insoweit bevorzugten Rutsche 4 sind zwei Leiteinrichtungen 9,10 auf unterschiedlichen Höhen der Rutsche 4 vorgesehen. Die Leiteinrichtungen 9,10 erstrecken sich quer zum Rutschenboden 6 bzw. quer zur Transportrichtung der Stückgüter 2 entlang der Rutsche 4. Die Erstreckung der Leiteinrichtung 9,10 kann auch als horizontal angesehen werden. Ohne die Leiteinrichtung 9,10 wäre der Weg, den die Stückgüter 2 entlang des Rutschenbodens 6 nehmen, durch die Stückgüter 2 und die Bewegungskomponenten, mit denen die Stückgüter 2 auf die Rutsche 4 gelangen, festgelegt. Die Leiteinrichtungen 9,10 können die Transportrichtung der Stückgüter 2 entlang der Rutsche 4 beeinflussen, indem die Leiteinrichtungen 9,10 den Stückgütern 2 eine bestimmte Bewegungskomponente aufprägen, die bedarfsweise von Stückgut 2 zu Stückgut 2 unterschiedlich sein kann.

Die Leiteinrichtungen 9,10 sind zwischen zwei Rutschenbodenabschnitten 11,12,13 vorgesehen. Während die Bewegung der Stückgüter 2 entlang der Rutschenbodenabschnitte 11,12,13 nicht beeinflusst werden kann, können die Stückguter 2 beim Passieren der Leiteinrichtung 9,10 in eine bestimmte Richtung gelenkt werden. Dies kann durch ein Anheben oder ein Absenken der Leiteinrichtung 9,10 oder wenigstens von Teilen davon erreicht werden.

Bei der dargestellten und insoweit bevorzugten Rutsche 4 weist die Leiteinrichtung 9,10 ein freies unteres Ende 14 auf, das höhenverstellbar ausgebildet ist. Das obere Ende 15 der Leiteinrichtung 9,10 endet wenigstens in etwa auf der Höhe des darüber angeordneten Rutschenbodenabschnitts 11,12, so dass die Stückgüter 2 problemlos von einem Rutschenbodenbschnitt 11,12 auf eine sich dem Rutschenbodenabschnitt 11,12 anschließende Leiteinrichtung 9,10 gelangen können. Bei der dargestellten und insoweit bevorzugten Rutsche 4 kann das freie untere Ende 14 der Leiteinrichtung 9,10 wenigstens in etwa auf Höhe des sich anschließenden Rutschenbodenabschnitts 12,13 angeordnet sein. Dann können die Stückgüter 2 stetig oder gleichförmig, insbesondere ohne Sprung, von der Leiteinrichtung 9,10 auf den nachfolgenden Rutschenbodenabschnitt 12,13 gelangen. Die Leiteinrichtungen 9,10 können dann die Stückgüter 2 bedarfsweise abbremsen, was dazu führen kann, dass die Stückgüter 2 infolge der Leiteinrichtung 9,10 auf dem sich anschließenden Rutschebodenabschnitt 12,13 in eine andere Richtung rutschen. Somit kann bereits ein Abbremsen der Stückgüter 2 bereits zu einem Leiten der Stückgüter 2 führen.

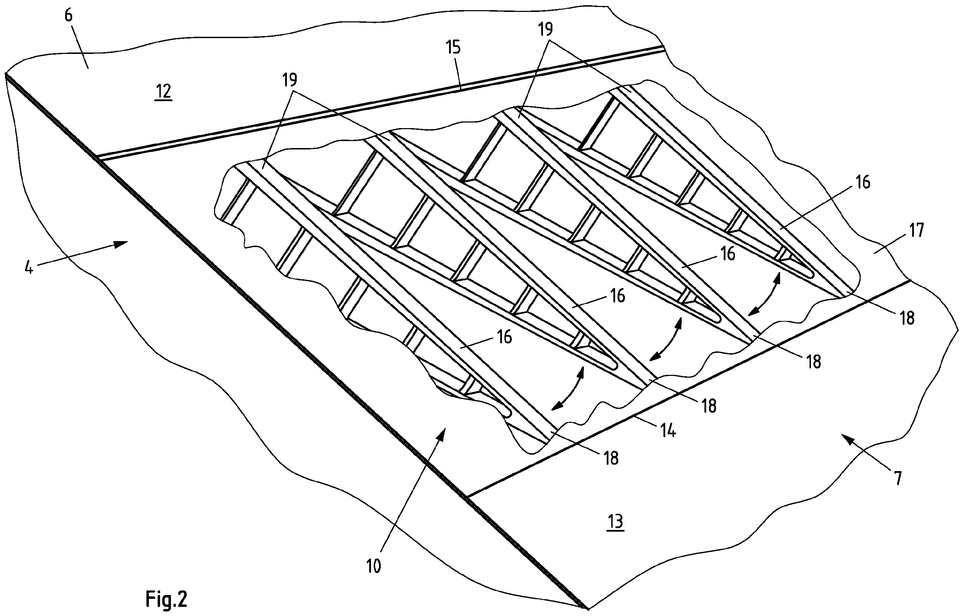

Den Stückgütern 2 wird jedoch insbesondere durch eine gezielte Höhenverstellung der Leiteinrichtung 9,10 eine Bewegungskomponente aufgeprägt. In einem einfachen Fall kann die Leiteinrichtung 9,10 insgesamt angehoben oder abgesenkt werden. Die Leiteinrichtung 9,10 weist jedoch, wie dies in Detail der Leiteinrichtung gemäß Fig. 2 dargestellt ist, eine Reihe von Fingerelementen 16 auf, die entlang der Erstreckung der Leiteinrichtung 9,10 quer zum Rutschenboden 6, insbesondere gleichmäßig, verteilt sowie unabhängig voneinander höhenverstellbar angeordnet sind. Die Fingerelemente 16 sind unter einer flexiblen Materialbahn 17 angeordnet, die wenigstens teilweise auf den Fingerelementen 16 aufliegt oder wenigstens teilweise von den Fingerelementen 16 getragen wird. Die Materialbahn 17 ist ferner so flexibel, dass sie sich der Stellung der Fingerelemente 16 quer zur Rutsche 4 anpassen kann. So können die Fingerelemente 16 die Kontur der Leiteinrichtung 9,10 quer zur Rutsche 4 vorgeben, der die Materialbahn 17 wenigstens im Wesentlichen folgt. Wenn sich die Krümmung der Fingerelemente 16 bei der Höhenverstellung der freien Enden 18 der Fingerelemente 16 verändert, hat dies vorzugsweise auch Auswirkungen auf die Anordnung der Materialbahn 17, die vorzugsweise auch der Krümmung der Fingerelemente 16 entlang deren Längserstreckung wenigstens im Wesentlichen folgt. Zudem sind die freien Enden 18 der Fingerelemente 16 dem unteren Ende 14 der Materialbahn 17 und der Leiteinrichtung 9,10 zugeordnet. Im Übrigen bieten sich Materialbahnen 17 aus Kunststoff, insbesondere Kunststofffolien an, die vorzugweise verhältnismäßig abriebfest sind.

Es müssen bei entsprechenden Leiteinrichtungen 9,10 also nicht alle Fingerelemente 16 in gleicher Weise angehoben oder abgesenkt werden. Bei der dargestellten und insoweit bevorzugten Rutsche 4 sind die Fingerelemente 16 der Leiteinrichtungen 9,10 jeweils wenigstens im Wesentlichen unabhängig von den anderen Fingerelementen 16 höhenverstellbar vorgesehen. Die Höhenverstellung bezieht sich dabei insbesondere auf die freien Enden 18 der Fingerelemente 16, die dem unteren, also dem in Transportrichtung der Stückgüter 2 hinteren, Ende 14 der Leiteinrichtung 9,10 zugeordnet ist. Das obere, also in Transportrichtung der Stückgüter 2 vordere, Ende 19 der Fingerelemente 16 ist bei der dargestellten und insoweit bevorzugten Rutsche 4 ortsfest angeordnet. Die Fingerelemente 16 können also bedarfsweise um dieses ortsfeste Ende 19 in vertikaler Richtung geschwenkt werden. Alternativ oder zusätzlich können die Fingerelemente 16 auch in vertikaler Richtung gekrümmt werden, wie dies nachfolgend noch erläutert wird. Eine Krümmung der Fingerelemente 16 ist jedoch nicht zwingend erforderlich, um die freien Enden der Fingerelemente 16 in ihrer Höhe zu verstellen. Die Fingerelemente 16 können bedarfsweise auch dazu ausgebildet sein, um gegenüber einer horizontalen Schwenkachse geschwenkt zu werden. Die Krümmung der Fingerelemente 16 wirkt sich jedoch grundsätzlich bevorzugt auf die Leitung der Stückgüter 2 aus.

Grundsätzlich ist es bevorzugt, wenn mittels der Leiteinrichtungen 9,10 auf die tatsächliche Anordnung der bereits etwa in einem Auffangbereich 20 am Ende der Rutsche 4 zwischengespeicherten Stückgüter 2 reagiert werden kann. Daher weist die Rutsche 4 einen Sensor 21 auf, bei dem es sich vorliegend um einen optischen Sensor 21 handelt. Der Sensor 21 erfasst die Lage der Stückgüter 2 insbesondere am unteren Ende der Rutsche 4, etwa in dem Auffangbereich 20. Dabei kann bedarfsweise drauf verzichtet werden, alle Stückgüter 2 einzeln zu erfassen. Es kann ausreichen, eine Mehrzahl von Stückgütern 2 gemeinsam zu erfassen, um so eine Information über deren Lage bzw. Anordnung in der Rutsche 4 zu erhalten. Dann können nämlich nachfolgende Stückgüter 2 mithilfe wenigstens einer Leiteinrichtung 9,10 dorthin in der Rutsche 4 gelenkt werden, wo noch Platz für weitere Stückgüter 2 ist. Zu diesem Zweck ist der Sensor 21 mit wenigstens einer Stelleinrichtung 22 verbunden. Von dem Sensor 21 wird ein Signal 23 an die wenigstens eine Stelleinrichtung 22 weitergegeben. Zudem ist wenigstens eine Antriebseinrichtung 24 zum Verstellen von wenigstens einem Fingerelement 16 oder einer von einer Gruppe von Fingerelementen 16 oder von den Fingerelementen 16 einer Leiteinrichtung 9,10 vorgesehen. Die Verstellung des wenigstens einen Fingerelements 16 durch die wenigstens einen Antriebseinrichtung 24 erfolgt angesteuert durch die wenigstens eine Stelleinrichtung 22 abhängig von dem Signal 23 des wenigstens einen Sensors 21. Auf diese Weise kann der Weg nachfolgender Stückgüter 2 entlang der Rutsche 4 in gewünschter und vorbestimmter Weise beeinflusst werden.

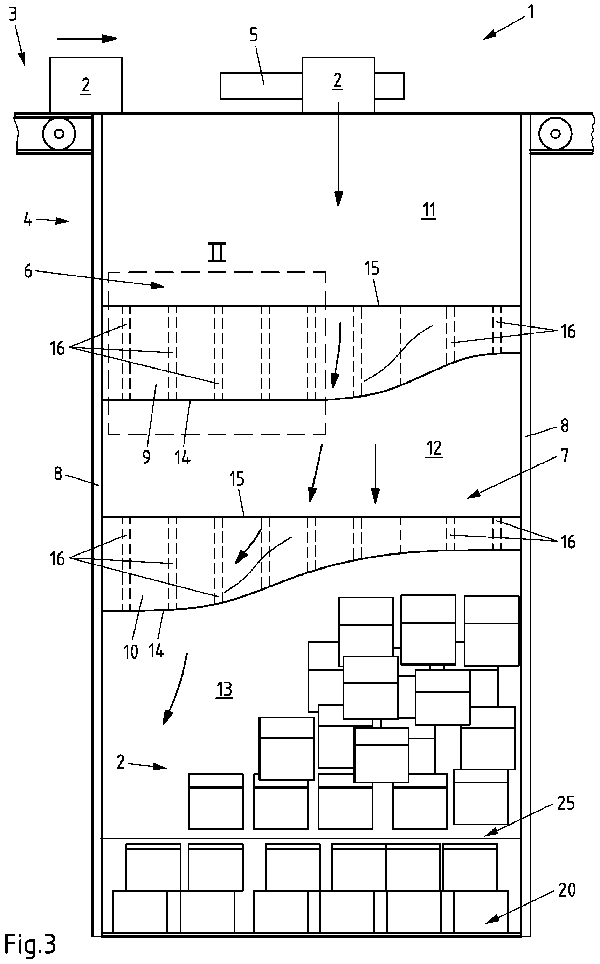

In der Fig. 3 ist das Detail der Sortiereinrichtung 1 der Fig. 1 in einer Draufsicht dargestellt. Die Fingerelemente 16 der oberen Leiteinrichtung 9 sind in unterschiedlicher Höhe angeordnet. Während die linken Fingerelemente 16 in einer unteren Stellung angeordnet sind, ist das rechte Fingerelement 16 in einer oberen Stellung angeordnet. Die anderen Fingerelemente 16 sind in unterschiedlichen Stellungen zwischen der oberen und der unteren Stellung vorgesehen, wobei die Fingerelemente 16 umso höher angeordnet sind je weiter rechts die Fingerelemente 16 angeordnet sind. In diesem Bereich ist die Leiteinrichtung 9 folglich zur linken Seite geneigt. Das untere freie Ende 14 der Leiteinrichtung 9 ist zudem wellenförmig angeordnet. Das nächste Stückgut 2, das in die Rutsche 4 geschoben wird, gelangt in diesem Bereich auf die Leiteinrichtung 9 und rutscht auf der Leiteinrichtung 9 infolge der schrägen Ausrichtung derselben in diesem Bereich nicht nur nach unten, sondern auch zur Seite bezogen auf die Rutsche 4. Dabei rutscht das Stückgut 2 prinzipiell umso mehr zur Seite, je stärker der entsprechende Bereich der Leiteinrichtung 9 zur entsprechenden Seite der Rutsche 4 geneigt ist. Der Weg, den das Stückgut 2 entlang der Rutsche 4 nimmt, ist durch die Pfeile mit durchgezogener Linie angedeutet.

Das durch die obere Leiteinrichtung 9 etwas zur Seite geleitete Stückgut 2 gelangt nach dem Passieren des nächsten Rutschenbodenbschnitts 12 auf die untere Leiteinrichtung 10. Bei dieser Leiteinrichtung 10 sind die linken beiden Fingerelemente 16 in der unteren Stellung angeordnet, während die rechten drei Fingerelemente 16 in der oberen Stellung angeordnet sind. Die dazwischen vorgesehenen Fingerelemente 16 sind zwischen der unteren Stellung und der oberen Stellung angeordnet, wobei von zwei benachbarten Fingerelementen 16 das rechte Fingerelement 16 stets höher angeordnet ist als das linke Fingerelement 16. Die Leiteinrichtung 10 ist quer zur Rutsche 4 wellenförmig ausgebildet, mit einem zur linken Seite geneigten Bereich, der weiter links angeordnet ist als der zur linken Seite geneigte Bereich der oberen Leiteinrichtung 9. Somit wird das Stückgut 2, dem durch die obere Leiteinrichtung 9 eine Bewegungskomponente nach links aufgeprägt wurde und das somit die untere Leiteinrichtung 10 in dem nach links geneigten Bereich passiert, noch weiter nach links geleitet, um auf der linken Seite der Rutsche 4, insbesondere des Auffangbereichs 20, zum Liegen zu kommen. Dort ist nämlich noch ausreichend Platz, um weitere Stückgüter 2 aufzunehmen.

Die Stückgüter 2 können jedoch nicht nur zur Seite geleitet werden, Die Stückgüter 2 können alternativ oder zusätzlich in vertikaler Richtung geleitet werden, nämlich insbesondere nach oben auf bereits gespeicherte Stückgüter 2, um so einen Stapel 25 von Stückgütern 2 zu bilden, der weniger Platz beansprucht als ausschließlich nebeneinander angeordnete Stückgüter 2. Dies wird ebenfalls anhand der Fig. 3 anhand eines weiteren Stückguts 2 lediglich beispielhaft veranschaulicht, das durch die erste Leiteinrichtung 9 - aus welchen Gründen auch immer - weniger weit nach links gelenkt wird als das Stückgut 2, das den durchgezogenen Pfeilen folgt. Dieses Stückgut 2 folgt dem gestrichelt dargestellten Pfeil und passiert die untere Leiteinrichtung 10 daher an einer Stelle, an der die Fingerelemente 16 der unteren Leiteinrichtung 10 wenigstens im Wesentlichen in der oberen Stellung angeordnet sind. Dadurch wird das Stückgut 2 auf bereits gespeicherte und vor dem entsprechenden Abschnitt der unteren Leiteinrichtung 10 angeordnete Stückgüter 2 gelenkt. Die Stückgüter 2 bilden folglich einen platzsparenden Stapel 25 aus Stückgütern 2 aus.

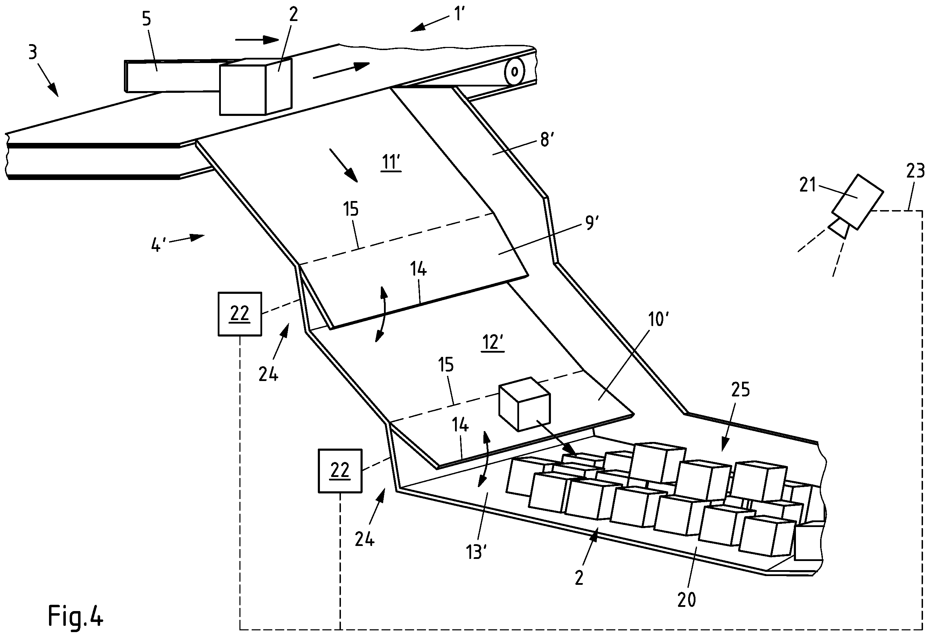

In der Fig. 4 ist eine Sortiereinrichtung 1' dargestellt, die der Sortiereinrichtung der Fig. 1 ähnelt, weshalb für gleiche Bauteile auch gleiche Bezugszeichen verwendet werden. Ein wesentlicher Unterschied zwischen den Sortiereinrichtungen 1,1' betrifft die Rutsche 4,4', und zwar insbesondere den Rutschenboden 6,6'. Die Rutsche 4' ist ebenfalls als Kastenrutsche mit seitlichen Seitenwangen 8' ausgebildet, allerdings weisen die Rutschenbodenabschnitte 11',12',13' jeweils eine konstante Neigung auf. Die Rutschenbodenabschnitte 11',12',13' sind also eben und können dieselbe Neigung oder unterschiedliche Neigungen zur Horizontalen aufweisen. Bei der Rutsche 4 gemäß Fig. 1 ändert sich dagegen die Neigung jedes Rutschenbodenabschnitts 11,12,13 allmählich und gleichmäßig vom oberen Ende zum unteren Ende des Rutschenbodenabschnitts 11,12,13.

Darüber hinaus sind die drei Rutschenbodenabschnitte 11',12',13' nicht fluchtend zueinander angeordnet, wie dies wenigstens annähernd bei der Rutsche gemäß Fig. 1 der Fall ist. Zwischen den angrenzenden Rutschenbodenabschnitten 11',12',13' ist ein deutlich größerer Höhenversatz vorgesehen, wodurch sich zwischen den jeweils angrenzenden Rutschenbodenabschnitten 11',12',13' jeweils ein Sprung für die zu sortierenden Stückgüter 2 ergibt. Die zwischen den Rutschenbodenabschnitten 11',12',13' vorgesehenen Leiteinrichtungen 9',10' können je nach deren Stellung den Sprung für die Stückgüter 2 mindern oder auch nicht. Bei der Rutsche 4 gemäß Fig. 1 kann ein stetiger oder wenigstens im Wesentlichen gleichmäßiger Verlauf der Neigung von einem Rutschenbodenabschnitt 11,12 über eine Leiteinrichtung 9,10 hinweg zum nächsten Rutschenbodenabschnitt 12,13 erreicht werden, insbesondere wenn die Fingerelemente 16 der Leiteinrichtung 9,10 in der unteren Stellung angeordnet sind, was noch durch eine Krümmung der Fingerelemente 16' unterstützt werden kann. Dies ist bei der Rutsche 4' gemäß Fig. 4 nicht möglich. Es verbleibt wenigstens beim Übergang von einem Rutschenbodenabschnitt 11',12' auf die nachfolgende Leiteinrichtung 9',10' oder beim Übergang von einer Leiteinrichtung 9',10' auf den nachfolgenden Rutschbodenabschnitt 12',13' eine Unstetigkeit. Dies bedeutet, dass die Neigung von Rutschenbodenabschnitt 11',12',13' und Leiteinrichtung 9',10' nicht ineinander übergehen, sondern sich sprunghaft ändern oder wenigstens ein erheblicher Höhenversatz zwischen dem freien unteren Ende 14 einer Leiteinrichtung 9',10' und dem nachfolgenden Rutschbodenabschnitt 11',12',13' vorgesehen ist, der einen Sprung für das zu speichernde Stückgut 2 darstellt. Ein entsprechender Sprung und/oder eine entsprechende Unstetigkeit der Neigungen könnte bedarfsweise auch bei einer Rutsche mit Rutschenbodenabschnitten vorgesehen werden, deren Neigung sich vom Anfang des Rutschenbodenabschnitts zum Ende des Rutschenbodenabschnitts ändert bzw. die eine gekrümmte Rutschfläche bereitstellt. Die entsprechenden, zuvor erläuterten Prinzipien sind entsprechend übertragbar und kombinierbar.

In diesem Zusammenhang ist selbstverständlich zu berücksichtigen, dass die in der Fig. 4 dargestellten Leiteinrichtungen 9',10' lediglich der Einfachheit halber quer zur Rutsche 4' in einer konstanten Höhe angeordnet sind. Da auch die Leiteinrichtungen 9',10' eine Reihe von gegeneinander höhenverstellbaren Fingerelementen 16' aufweisen, könnten die Leiteinrichtungen 9',10' auch an unterschiedlichen Stellen quer zur Rutsche 4' unterschiedliche Neigungen aufweisen. Dabei können bedarfsweise die bereits beschriebenen Prinzipien und die ebenfalls bereits beschriebenen Fingerelemente zur Anwendung kommen. Alternativ könnten aber auch Fingerelemente eingesetzt werden, deren Krümmung sich bei der Höhenverstellung nicht ändert, sondern die insoweit starr ausgebildet sind. Die Fingerelemente können dann um eine vorzugsweise horizontale Achse nach oben und unten geschwenkt werden. Da entsprechende Fingerelemente für den Fachmann bereitzustellen sind, bedarf es vorliegend keiner weiteren Beschreibung entsprechender Fingerelemente.

In der Fig. 4 ist die obere Leiteinrichtung 9' in einer unteren oder nahe der unteren Stellung angeordnet, um den Sprung der Stückgüter 2 abzumindern und so Beschädigungen zu verhindern oder jedenfalls zu vermindern. Die untere Leiteinrichtung 10' befindet sich in einer oberen Stellung oder ist gegenüber der Stellung der oberen Leiteinrichtung 9' erheblich angehoben. Dies führt dazu, dass weitere die untere Leiteinrichtung 10' passierende Stückgüter 2 auf bereits in der Rutsche 4' gespeicherte Stückgüter 2 geleitet werden und dort einen Stapel 25 bilden. Dabei gilt sowohl für die Rutsche 4' gemäß Fig. 4 als auch die Rutsche 4 gemäß Fig. 1, dass bedarfsweise auf die obere oder untere Leiteinrichtung 9,9',10,10' verzichtet werden kann. Je mehr Leiteinrichtungen vorgesehen sind, desto höher ist der apparative und steuerungstechnische Aufwand. Allerdings können die Stückgüter 2 bei mehreren Leiteinrichtungen genauer, flexibler und umfassender entlang der Rutsche 4,4' geleitet werden.

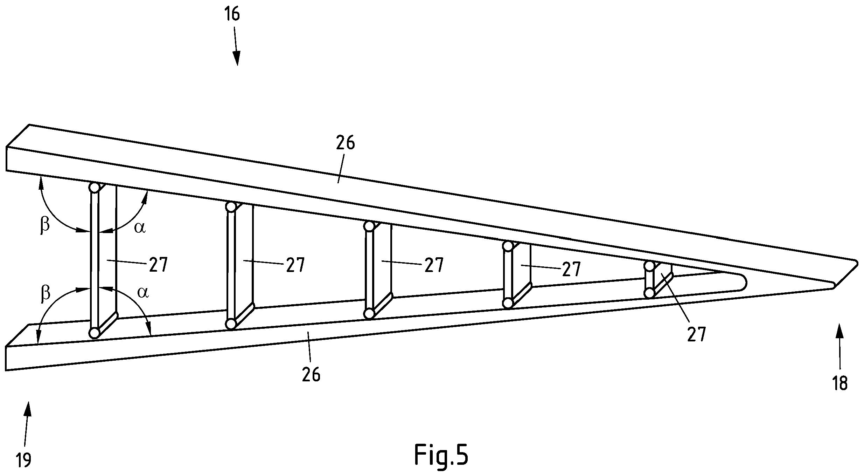

In der Fig. 5 ist ein Fingerelement 16 einer Leiteinrichtung 9,10 einer Rutsche 4 dargestellt. Das Fingerelement 16 umfasst zwei Flankenelemente 26, die bei dem dargestellten und insoweit bevorzugten Fingerelement 16 gemeinsam von einem links dargestellten, mit der Rutsche 4 verbundenen Ende 19 des Fingerelements 16 zum gegenüberliegenden, rechts dargestellten freien Ende 18 des Fingerelements 16 verlaufen. Dabei nähern sich die Flankenelemente 26 in Richtung des freien Endes 18 kontinuierlich einander an, bis die Flankenelemente 26 beim dargestellten und insoweit bevorzugten Fingerelement 16 am freien Ende 18 des Fingerelements 16 ineinander übergehen. Daher wird ein sich in eine Richtung verjüngende, konisch zulaufende Fingerelement 16 erhalten. Zwischen den Flankenelementen 26 sind über die Länge des Fingerelements 16 verteilt Stege 27 vorgesehen, über die die Flankenelemente 26 miteinander verbunden sind. Bei dem dargestellten und insoweit bevorzugten Fingerelement 16 sind die Stege 27 an den gegenüberliegenden Enden jeweils schwenkbar, insbesondere gelenkig, mit den Flankenelementen 26 verbunden.

Alternativ könnten die Stege 27 flexibel ausgebildet sein, um eine Bewegung der Stege 27 gegenüber den Flankenelementen 26 zu ermöglichen. Die Stege 27 sind bei dem dargestellten und insoweit bevorzugten Fingerelement 16 in gleichmäßigen Abständen über die Länge des Fingerelements 16 verteilt. Dies ist jedoch nicht zwingend erforderlich. Auch ist es lediglich der Einfachheit halber bevorzugt, dass die Stege 27 parallel zueinander verlaufen. Besonders zweckmäßig ist es jedoch, dass die Stege 27 mit jedem der Flankenelemente 16 auf einer Seite einen spitzen Winkel α und auf der gegenüberliegenden Seite einen stumpfen Winkel β bilden.

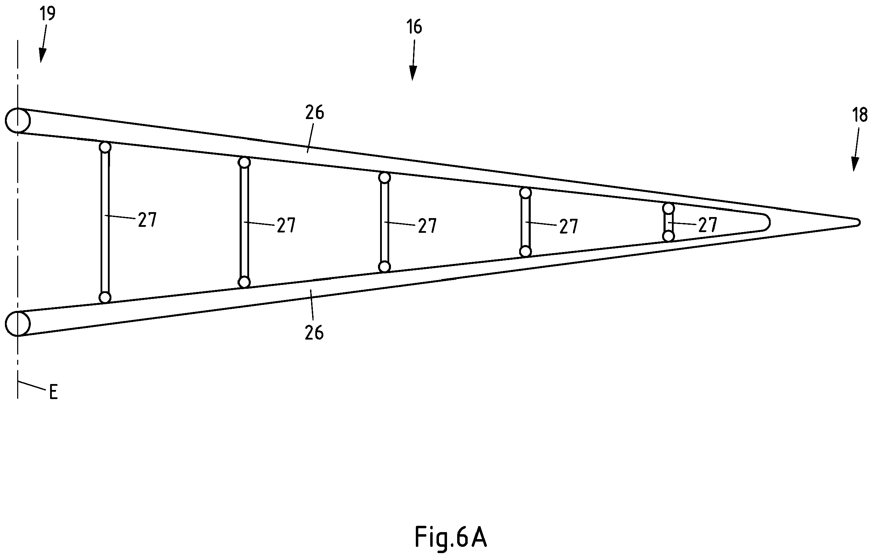

Die dargestellten und insoweit bevorzugten Flankenelemente 26 sind flexibel ausgebildet, so dass sich die Flankenelemente 26 biegen lassen, wobei sich das Fingerelement 16 mehr oder weniger krümmt, was insbesondere in den Fig. 6A-C dargestellt ist. Durch das Krümmen der Fingerelemente 16 einer Leiteinrichtung werden die freien Enden der Fingerelemente insbesondere nach oben oder unten bewegt. Dies führt letztlich zu einer Höhenverstellung der Fingerelemente insgesamt, auch wenn diese an einem Ende fest mit der Rutsche oder der Leiteinrichtung verbunden sein können. Die Flankenelemente können dazu beispielsweise aus einem Metall oder einem Kunststoff gebildet werden. Gleiches gilt für die Stege, die jedoch nicht flexibel ausgebildet sein müssen.

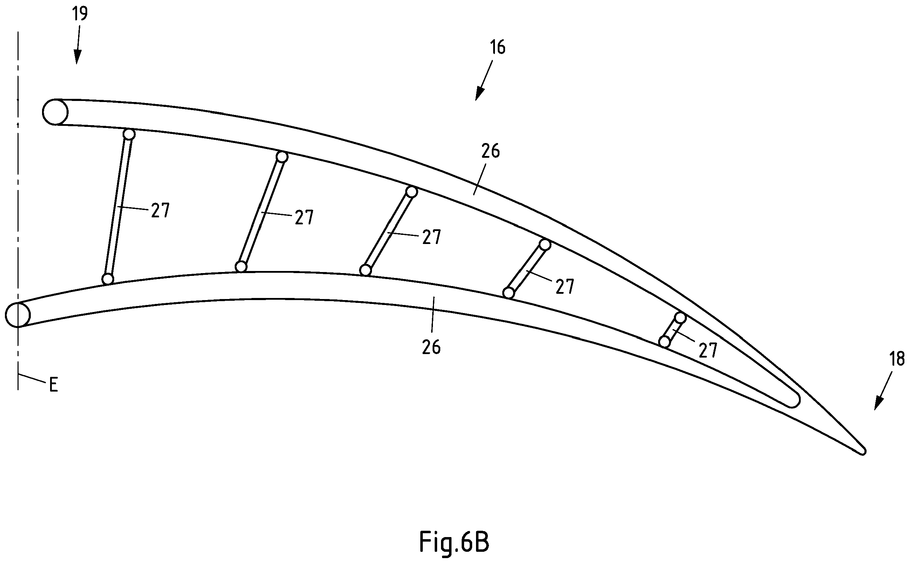

In der Fig. 6A ist das Fingerelement 16 aus Fig. 5 in einer gestreckten Ausrichtung dargestellt, bei der die Enden der Flankenelemente 26 in einer Ebene E angeordnet sind. Bei dem dargestellten und insoweit bevorzugten Fingerelement 16 sind die Flankenelemente 26 in dieser Stellung wenigstens im Wesentlichen symmetrisch zueinander ausgebildet. Wird gemäß Fig. 6B das obere Flankenelement 26 gegenüber der Ebene E in Richtung des freien Endes des Fingerelements 16 verschoben, so krümmt sich das Fingerelement 16 nach unten. Anders ausgedrückt, wird das Fingerelement 16 nach unten verstellt, wobei ein Fingerelement 16 bedarfsweise auch ohne eine Krümmung desselben, vorzugsweise insgesamt, nach unten oder oben verstellt werden kann. Die Krümmung des dargestellten und insoweit bevorzugten Fingerelements 16 ergibt sich infolge der Flexibilität der Flankenelemente 26 und der schwenkbaren Verbindungen zwischen den Flankenelementen 26 und den dazwischen vorgesehenen Stegen 27. Dabei ist zu beachten, dass die Flankenelemente 26 nicht zwingend über ihre gesamte Längserstreckung flexibel ausgebildet sein müssen, auch wenn dies oftmals bevorzugt sein wird. Es ist auch denkbar dass die Flankenelemente starre Abschnitte aufweisen die miteinander schwenkbar, insbesondere gelenkig, vorzugsweise durch ein Scharnier, verbunden sind. Dabei sollten entsprechende Flankenelemente zwischen zwei Stegen wenigstes eine Schwenkverbindung aufweisen.

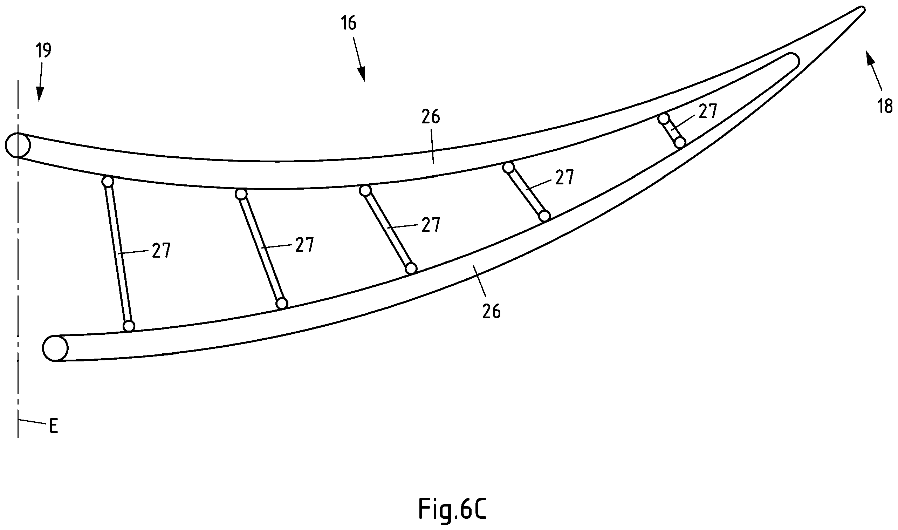

Das Fingerelement 16 krümmt sich gemäß Fig. 6C in analoger Weise nach oben, wenn das untere Flankenelement 26 gegenüber der Ebene E nach vorne in Richtung des freien Endes 18 des Fingerelements 16 verschoben wird. Auf diese Weise kann also ein Verstellen des freien Endes 18 des Fingerelements 16 als auch ein Verstellen des Fingerelements 16 jeweils nach unten erreicht werden.

Den Fig. 6A-C kann ferner entnommen werden, dass die Stege 27 zwischen den Flankenelementen 26 sich beim Krümmen des Fingerelements 16 in entgegengesetzte Richtungen neigen, wenn das Fingerelement 16 nach oben und nach unten verstellt wird. Zum Verstellen der Flankenelemente 16 analog zu den Fig. 6A-C kann eine nicht dargestellte Antriebseinheit 24 vorgesehen sein. Dabei sind geeignete Antriebseinheiten 24, wie etwa Linearantriebe aus dem Stand der Technik bekannt. Nicht dargestellt ist zudem, dass mehr als zwei, beispielweise wenigstens drei oder vier, Flankenelemente vorgesehen sein können, etwa um das Fingerelement beispielsweise nicht nur rauf und runter, sondern auch zur Seite zu verstellen. Der Einfachheit halber sind diese dann, insbesondere gleichmäßig, verteilt um eine Längsachse der Fingereinheit angeordnet. Die mehreren Flankenelemente können dann, insbesondere mit freien Enden, in einer gemeinsamen Spitze der Fingereinheit zusammenlaufen. Zudem oder alternativ können die Stege vorzugsweise jeweils alle Flankenelemente miteinander verbinden. Die dargestellten und insoweit bevorzugten Flankenelemente sind streifenförmig ausgebildet. Es wäre aber auch eine plattenförmige oder stabförmige Ausgestaltung der Flankenelemente möglich, solange die Flankenelemente ein gegenseitiges Verschieben und Krümmen der Flankenelemente ermöglichen.

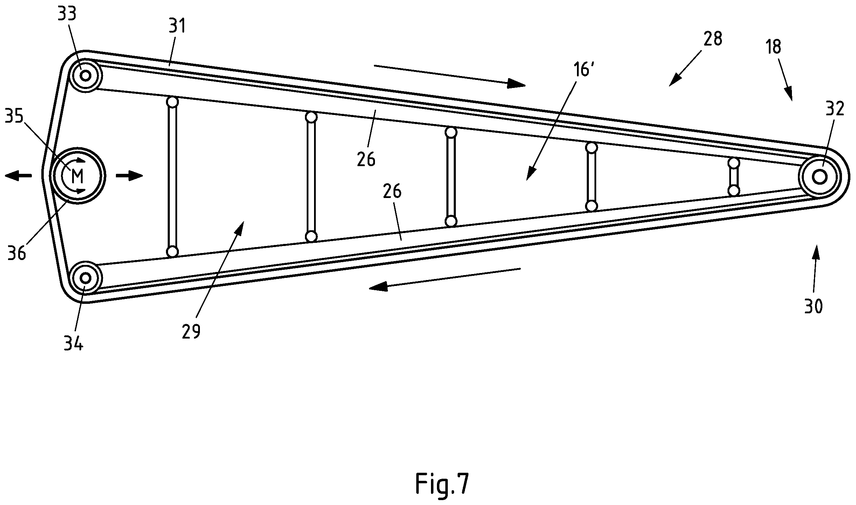

In der Fig. 7 ist ein Fingerelement 16' als Teil oder in Form eines Gurtförderers 28 dargestellt, wobei das Fingerelement 16' beim dargestellten und insoweit bevorzugten Ausführungsbeispiel die Tragstruktur 29 des Gurtförderers 28 bildet. Das Fingerelement 16' ist dabei prinzipiell analog zu dem in der Fig. 1 dargestellten Fingerelement 16 ausgebildet. Daher kann der Gurtförderer 28, insbesondere das freie Ende 30 des Gurtförderers 28, nach oben und nach unten verstellt werden. Der um das Fingerelement 16' längs der Flankenelemente 26 umlaufende Gurt 31 folgt dabei der Verstellung, insbesondere der Krümmung des Fingerelements 16' nach oben und nach unten. Der Gurt 31 läuft dabei endlos um die Tragstruktur 29 und damit um die Fingereinheit 16' um. Dazu weist das dargestellte und insoweit bevorzugte Fingerelement 16' mehrere Umlenkungen in Form von Umlenkrollen 32,33,34 auf. Eine Umlenkrolle 32 ist am freien Ende 18 des Fingerelements 16' und jeweils eine weitere Umlenkrolle 33,34 an den gegenüberliegenden Enden der Flankenelemente 26. Die Umlenkrollen 32,33,34 werden dabei von der Tragstruktur 29 des Fingerelements 16' getragen. Damit der Gurt 31 bedarfsweise auch im Falle eines gekrümmten Fingerelement 16' nahe an dem oberen Flankenelement 26 oder an beiden Flankenelementen 26 geführt wird, kann der Gurt 31 über geeignete Verbindungsmittel an wenigstens einer Stelle an wenigstens dem oberen Flankenelement 26 gehalten werden.

Der Gurt 31 des Fingerelements 16' kann durch die auf ein sich auf dem Fingerelement 16' befindenden Stückgut 2 wirkende Gewichtskraft angetrieben werden, um den Transport des Stückguts 2 entlang des Fingerelements 16' zu verbessern. Es kann aber auch ein motorischer Antrieb des Gurtes 31 vorgesehen sein, um den Gurt 31 zwangsweise anzutreiben. Der Gurt 31 bewegt sich dabei bevorzugt an der Oberseite des Fingerelements 16' in Richtung des freien Endes 18 des Fingerelements 16'. Um ein Stückgut 2 abzubremsen, können der Antrieb und der Gurt 31 dazu ausgebildet sein, den Gurt 31 langsamer als die ursprüngliche Geschwindigkeit des Stückguts 2 oder gar in die entgegengesetzte Richtung anzutreiben. Der Antrieb 35 wirkt über eine Antriebsrolle 36, die bedarfsweise zum Spannen des Gurts 31 beispielsweise in Längsrichtung des Fingerelements 16' verstellt werden kann, auf den Gurt 31. Zudem können für einen möglichst schlupffreien Antrieb des Gurts 31 am Gurt 31 und an der Antriebsrolle 36 korrespondierende Verzahnungen vorgesehen sein, die miteinander kämmen. Anders als in der Fig. 7 dargestellt, kann die Tragstruktur des Fingerelements bedarfsweise noch weitere Bauteile aufweisen.

Der Gurt 31 des Gurtförderers 28, sei er motorisch angetrieben oder nicht, kann bedarfsweise lediglich um ein Fingerelement 16' umlaufen, wobei dann bedarfsweise jedes Fingerelement 16' einen separaten Gurt 31 aufweisen kann. So können die Stückgüter 2 sehr flexibel und an verschiedenen Stellen der Leiteinrichtung 9,10 unterschiedlich gelenkt werden. Allerdings ist dann grundsätzlich der apparative und regelungstechnische Aufwand höher. Apparativ und regelungstechnisch einfacher ist es dagegen, wenn wenigstens ein Gurt 31 sich quer zur Rutsche 4 über eine Mehrzahl nebeneinander angeordneter Fingerelemente 16' erstreckt und um diese Mehrzahl an Fingerelementen 16' auch umläuft. Bedarfsweise kann auch ein einziger Gurt 31 um alle Fingerelemente 16' einer Leiteinrichtung 9,10 umlaufen und dabei die Lücken zwischen den Fingerelementen 16' überdecken.

## Patentansprüche

1. Rutsche (4,4') für Stückgut (2), insbesondere Packstücken und/oder Sendungen, mit einem Rutschenboden (6) zum Herunterrutschen des Stückguts (2) umfassend wenigstens zwei Rutschenbodenabschnitte (11,11',12,12',13,13'), wobei die wenigstens zwei Rutschenbodenabschnitte (11,11',12,12',13,13') einen Höhenversatz zwischen einander bilden, wobei wenigstens eine Leiteinrichtung (9,9',10,10') zwischen den wenigstens zwei Rutschenbodenabschnitten (11,11',12,12',13,13') zum Leiten des Stückguts (2) von einem Rutschenbodenabschnitt (11,11',12,12') zum nächsten Rutschenbodenabschnitt (12,12',13,13') vorgesehen ist, wobei die wenigstens eine Leiteinrichtung (9,9',10,10') ein höhenverstellbares und in Richtung des nächsten Rutschenbodenabschnitts (12,12',13,13') weisendes freies Ende (14) aufweist, wobei die Leiteinrichtung (9,9',10,10') quer zum Rutschenboden (6) mehrere nebeneinander angeordnete und wenigstens teilweise unabhängig voneinander höhenverstellbare Fingerelemente (16,16') aufweist, **dadurch gekennzeichnet, dass**
die Fingerelemente (16,16') eine flexible, die Zwischenräume zwischen den Fingerelementen (16,16') überbrückende Materialbahn (17) tragen und/oder dass die Fingerelemente (16,16') wenigstens eine um jeweils wenigstens ein Fingerelement (16,16') umlaufende und in Längsrichtung der Fingerelemente (16,16') angetriebene Materialbahn aufweisen.

2. Rutsche nach Anspruch 1,
**dadurch gekennzeichnet, dass**
die freien Enden (18) der Fingerelemente (16,16') auf unterschiedlichen Höhen, insbesondere wellenförmig quer zum Rutschenboden (6), angeordnet sind und, vorzugsweise, dass die freien Enden (18) der Fingerelemente (16,16') quer zum Rutschenboden (6) abschnittsweise in einer unteren Stellung abschnittsweise in einer oberen Stellung und/oder abschnittsweise, insbesondere dazwischen, in einer Stellung zwischen der unteren Stellung und der oberen Stellen angeordnet sind.

3. Rutsche nach Anspruch 1 oder 2,
**dadurch gekennzeichnet, dass**
die freien Enden (18) der Fingerelemente (16,16') zwischen einer unteren Stellung und einer oberen Stellung wenigstens im Wesentlichen stufenlos verstellbar sind.

4. Rutsche nach einem der Ansprüche 1 bis 3,
**dadurch gekennzeichnet, dass**
die freien Enden (18) der Fingerelemente (16,16') in einer unteren Stellung, vorzugsweise zum Bereitstellen eines gleichmäßigen Übergangs der Neigung des Rutschenbodens (6) von einem Rutschenbodenabschnitt (11,11',12,12') zum nächsten Rutschenbodenabschnitt (12,12',13,13'), wenigstens in etwa auf der Höhe des nächsten Rutschenbodenabschnitts (12,12',13,13') und/oder in einer oberen Stellung in einem bestimmten vertikalen Abstand von dem nächsten Rutschenbodenabschnitt (12,12',13,13') angeordnet sind.

5. Rutsche nach einem der Ansprüche 1 bis 4,
**dadurch gekennzeichnet, dass**
die Fingerelemente (16,16') jeweils wenigstens zwei sich gemeinsam in Längsrichtung des Fingerelements (16,16') bis zum freien Ende des Fingerelements (16,16') erstreckende flexible Flankenelemente (26) aufweisen und dass die flexiblen Flankenelemente (26) in Längsrichtung der Fingerelemente (16,16') jeweils über eine Mehrzahl von Stegen (27) flexibel miteinander verbunden sind, so dass die freien Enden (18) der Fingerelemente (16,16') von einer unteren Stellung in eine obere Stellung und zurück verstellt werden können.

6. Rutsche nach Anspruch 5,
**dadurch gekennzeichnet, dass**
die Stege (27) und die zugehörigen flexiblen Flankenelemente (26) jeweils einen spitzen Winkel α, vorzugsweise zwischen 10° und 80°, und einen stumpfen Winkel β, vorzugsweise zwischen 100° und 170° aufweisen.

7. Rutsche nach Anspruch 5 oder 6,
**dadurch gekennzeichnet, dass**
die flexiblen Flankenelemente (26) der Fingerelemente (16,16') jeweils, insbesondere über eine Antriebseinrichtung (24), in Längsrichtung der Fingerelemente (16,16') derart gegeneinander verstellbar sind, so dass die Fingerelemente (16,16') durch ein Verstellen der flexiblen Flankenelemente (26) gegeneinander mehr oder weniger gekrümmt werden.

8. Rutsche nach einem der Ansprüche 1 bis 7,
**dadurch gekennzeichnet, dass** wenigstens ein, vorzugsweise optischer, Sensor (21) zum Erfassen der Anzahl und/oder Art einzelner gespeicherter Stückgüter (2), der Lage einzelner gespeicherter Stückgüter (2), von Abmessungen einzelner gespeicherter Stückgüter (2), der Anordnung eines Haufens (25) gespeicherter Stückgüter (2) und/oder der Form eines Haufens (25) gespeicherter Stückgüter (2).

9. Rutsche nach einem der Ansprüche 1 bis 8,**dadurch gekennzeichnet, dass** eine Stelleinrichtung (22) zum Verstellen der Höhe der freien Enden (18) der Fingerelemente (16,16') zweitabhängig, abhängig von der Anzahl und/oder Art einzelner gespeicherter Stückgüter (2) und/oder abhängig von wenigstens einen von dem Sensor (21) erfassten Parameter vorgesehen ist.

10. Rutsche nach einem der Ansprüche 1 bis 9 **dadurch gekennzeichnet, dass**
eine wenigstens ein, insbesondere höhenverstellbares Handelement vorgesehen ist, dass das wenigstens eine Handelement mehrere gegeneinander höhenverstellbare Fingerelemente (16,16') trägt und, bedarfsweise, dass das wenigstens eine Handelement von einem, vorzugsweise höhenverstellbaren, Armelement getragen ist.

11. Rutsche nach einem der Ansprüche 1 bis 10 **dadurch gekennzeichnet, dass**
am unteren Ende der Rutsche (4,4') ein Auffangbereich (20) zum Zwischenspeichern von Stückgütern (2) vorgesehen ist.

12. Verfahren zum Fördern von Stückgütern (2), insbesondere Packstücken und/oder Sendungen, entlang einer Rutsche (4,4') nach einem der Ansprüche 1 bis 11,
- bei dem die Stückgüter (2) am unteren Ende der Rutsche (4,4') zwischengespeichert werden,
- bei dem die Höhe der freien Enden (18) wenigstens einzelner Fingerelemente (16,16') während des Zwischenspeicherns der Stückgüter (2) verstellt wird, um die Breite der Rutsche (4,4') für das Speichern der Stückgüter (2) bessern auszunutzen, um zu speichernde Stückgüter (2) übereinander zu stapeln und/oder um die Fallhöhe der Stückgüter (2) von einem Rutschenbodenabschnitt (11,11',12,12') zum nächsten Rutschenbodenabschnitt (12,12',13,13') zu mindern.

13. Verfahren nach Anspruch 12, bei dem die Höhe der freien Enden (18) wenigstens einzelner Fingerelemente (16,16') zeitabhängig, abhängig von der Anzahl und/oder der Art einzelner gespeicherter Stückgüter (2), anhängig von der Lage einzelner gespeicherter Stückgüter (2), anhängig von Abmessungen einzelner gespeicherter Stückgüter (2), anhängig von der Anordnung eines Haufens (25) gespeicherter Stückgüter (2) und/oder anhängig von der Form eines Haufens (25) gespeicherter Stückgüter (2) in ihrer Höhe verstellt werden.

14. Verfahren nach Anspruch 13, bei dem die Anzahl und/oder die Art einzelner gespeicherter Stückgüter (2), die Lage einzelner gespeicherter Stückgüter (2), die Abmessungen einzelner gespeicherter Stückgüter (2), die Anordnung eines Haufens (25) gespeicherter Stückgüter (2) und/oder die Form eines Haufens (25) gespeicherter Stückgüter (2) mit wenigstens einem, vorzugsweise optischen, Sensor (21) erfasst wird und, vorzugsweise, bei dem der wenigstens eine Sensor (21) ein Signal (23) an eine Stelleinrichtung (22) zum Verstellen der Höhe der freien Enden (18) der Fingerelemente (16,16') abhängig von dem Signal (23) weitergegeben wird.

## Claims

1. Slide (4, 4') for packaged goods (2), in particular packages and/or consignments, with a slide base (6) for packaged goods (2) to slide down, comprising at least two slide base sections (11, 11', 12, 12', 13, 13'), wherein the at least two slide base sections (11, 11', 12, 12', 13, 13') form a height offset between one another, wherein at least one guide device (9, 9', 10, 10') is provided between the at least two slide base sections (11, 11', 12, 12', 13, 13') to guide the packaged goods (2) from a slide base section (11, 11', 12, 12') to the next slide base section (12, 12', 13, 13'), wherein the at least one guide device (9, 9', 10, 10') has a height-adjustable free end (14) pointing in the direction of the next slide base section (12, 12', 13, 13'), wherein the guide device (9, 9', 10, 10'), transverse to the slide base (6), has a plurality of finger elements (16, 16') arranged next to one another and adjustable in height at least partially independently of one another, **characterised in that** the finger elements (16, 16') support a flexible material web (17) spanning the intermediate spaces between the finger elements (16, 16') and/or **in that** the finger elements (16, 16') have at least one material web surrounding in each case at least one finger element (16, 16') and driven in the longitudinal direction of the finger elements (16, 16').

2. Slide according to claim 1, **characterised in that** the free ends (18) of the finger elements (16, 16') are arranged at different heights, in particular in a wave shape transverse to the slide base (6) and preferably **in that** the free ends (18) of the finger elements (16, 16') are arranged transverse to the slide base (6) in sections in a lower position, in sections in an upper position and/or in sections, in particular therebetween, in a position between the lower position and the upper position.

3. Slide according to claim 1 or 2, **characterised in that** the free ends (18) of the finger elements (16, 16') are at least substantially continuously adjustable between a lower position and an upper position.

4. Slide according to any one of claims 1 to 3, **characterised in that** the free ends (18) of the finger elements (16, 16') are arranged in a lower position, preferably to provide a uniform transition of the pitch of the slide base (6) from a slide base section (11, 11', 12, 12') to the next slide base section (12, 12', 13, 13'), at least roughly at the height of the next slide base section (12, 12', 13, 13') and/or in an upper position at a determined vertical distance from the next slide base section (12, 12', 13, 13').

5. Slide according to any one of claims 1 to 4, **characterised in that** the finger elements (16, 16') have in each case at least two flexible flank elements (26) extending together in the longitudinal direction of the finger element (16, 16') to the free end of the finger element (16, 16') and **in that** the flexible flank elements (26) are flexibly connected to one another in the longitudinal direction of the finger elements (16, 16') in each case via a plurality of webs (27) such that the free ends (18) of the finger elements (16, 16') can be adjusted from a lower position into an upper position and back.

6. Slide according to claim 5, **characterised in that** the webs (27) and the associated flexible flank elements (26) in each case have an acute angle α, preferably between 10° and 80° and an obtuse angle β, preferably between 100° and 170°.

7. Slide according to claim 5 or 6, **characterised in that** the flexible flank elements (26) of the finger elements (16, 16') are adjustable towards one another in each case, in particular via a drive device (24), in the longitudinal direction of the finger elements (16, 16') such that the finger elements (16, 16') can be curved towards one another to a greater or lesser extent by adjusting the flexible flank elements (26).

8. Slide according to any one of claims 1 to 7, **characterised in that** at least one, preferably optical sensor (21) is provided to detect the number and/or type of individual stored packaged goods (2), the position of individual stored packaged goods (2), the dimensions of individual stored packaged goods (2), the arrangement of a pile (25) of stored packaged goods (2) and/or the shape of a pile (25) of stored packaged goods (2).

9. Slide according to any one of claims 1 to 8, **characterised in that** an adjustment device (22) is provided to adjust the height of the free ends (18) of the finger elements (16, 16') in a time-dependent manner, dependent on the number and/or type of individual stored packaged goods (2) and/or dependent on at least one parameter detected by the sensor (21).

10. Slide according to any one of claims 1 to 9, **characterised in that** at least one, in particular height-adjustable hand element is provided **in that** the at least one hand element supports a plurality of finger elements (16, 16') height-adjustable in relation to one another and, if required, **in that** the at least one hand element is supported by a preferably height-adjustable arm element.

11. Slide according to any one of claims 1 to 10, **characterised in that** at the lower end of the slide (4, 4') a collection region (20) is provided to temporarily store packaged goods (2).

12. Method to convey packaged goods (2), in particular packages and/or consignments, along a slide (4, 4') according to any one of claims 1 to 11,
- in which the packaged goods (2) are temporarily stored at the lower end of the slide (4, 4'),
- in which the height of the free ends (18) of at least individual finger elements (16, 16') is adjusted while the packaged goods (2) are temporarily stored in order to better utilise the width of the slide (4, 4') for storing packaged goods (2), in order to stack on top of one another packaged goods (2) to be stored and/or in order to reduce the fall height of the packaged goods (2) from a slide base section (11, 11', 12, 12') to the next slide base section (12, 12', 13, 13').

13. Method according to claim 12, in which the height of the free ends (18) of at least individual finger elements (16, 16') are adjusted in their height in a time-dependent manner, dependent on the number and/or type of individual stored packaged goods (2), dependent on the position of individual stored packaged goods (2), dependent on dimensions of individual stored packaged goods (2), dependent on the arrangement of a pile (25) of stored packaged goods (2) and/or dependent on the shape of a pile (25) of stored packaged goods (2).

14. Method according to claim 13, in which the number and/or the type of individual stored packaged goods (2), the position of individual stored packaged goods (2), the dimensions of individual stored packaged goods (2), the arrangement of a pile (25) of stored packaged goods (2) and/or the shape of a pile (25) of stored packaged goods (2) is detected using at least one, preferably optical, sensor (21) and preferably in the case of which the at least one sensor (21) sends a signal (23) to an adjustment device (22) to adjust the height of the free ends (18) of the finger elements (16, 16') dependent on the signal (23).

## Revendications

1. Glissière (4, 4') pour marchandises au détail (2), en particulier des colis et/ou des envois, dotée d'un fond de glissière (6) permettant le glissement vers le bas des marchandises au détail (2), comportant au moins deux sections de fond de glissière (11, 11', 12, 12', 13, 13'), les au moins deux sections de fond de glissière (11, 11', 12, 12', 13, 13') formant entre elles un décalage en hauteur, au moins un dispositif de guidage (9, 9', 10, 10') entre les au moins deux sections de fond de glissière (11, 11', 12, 12', 13, 13') étant prévu pour diriger les marchandises au détail (2) d'une section de fond de glissière (11, 11', 12, 12') vers la prochaine section de fond de glissière (12, 12', 13, 13'), le au moins un dispositif de guidage (9, 9', 10, 10') présentant une extrémité libre (14) à hauteur réglable et orientée en direction de la prochaine section de fond de glissière (12, 12', 13, 13'), le dispositif de guidage (9, 9', 10, 10') présentant, transversalement par rapport au fond de glissière (6), plusieurs éléments en forme de doigts (16, 16') à hauteur réglable, au moins en partie indépendamment l'un de l'autre, et agencés l'un à côté de l'autre, **caractérisée en ce que** les éléments en forme de doigts (16, 16') portent une bande de matière (17) souple enjambant les espaces intermédiaires entre les éléments en forme de doigts (16, 16') et/ou **en ce que** les éléments en forme de doigts (16, 16') présentent au moins une bande de matière entourant respectivement au moins un élément en forme de doigt (16, 16') et entraînée en direction longitudinale de l'élément en forme de doigts (16, 16').

2. Glissière selon la revendication 1, **caractérisée en ce que** les extrémités libres (18) des éléments en forme de doigts (16, 16') sont agencées à des hauteurs différentes, en particulier de manière ondulée, transversalement par rapport au fond de glissière (6), et, de préférence, **en ce que** les extrémités libres (18) des éléments en forme de doigts (16, 16') sont agencées transversalement par rapport au fond de glissière (6), partiellement en une position inférieure, partiellement en une position supérieure et/ou partiellement, notamment entre les deux, dans une position entre la position inférieure et la position supérieure.

3. Glissière selon la revendication 1 ou 2, **caractérisée en ce que** les extrémités libres (18) des éléments en forme de doigts (16, 16') sont susceptibles de pouvoir être déplacées, au moins essentiellement de manière continue, entre une position inférieure et une position supérieure.

4. Glissière selon l'une des revendications 1 à 3, **caractérisée en ce que** les extrémités libres (18) des éléments en forme de doigts (16, 16') sont agencées dans une position inférieure, de préférence pour obtenir une transition uniforme de l'inclinaison du fond de glissière (6) d'une section de fond de glissière (11, 11', 12, 12') vers la prochaine section de fond de glissière (12, 12', 13, 13'), au moins à peu près à la hauteur de la prochaine section de fond de glissière (12, 12', 13, 13'), et/ou dans une position supérieure à une distance verticale déterminée de la prochaine section de fond de glissière (12, 12', 13, 13').

5. Glissière selon l'une des revendications 1 à 4, **caractérisée en ce que** les éléments en forme de doigts (16, 16') présentent respectivement au moins deux éléments de flanc (26) souples s'étendant conjointement dans le sens de la longueur des éléments en forme de doigts (16, 16') jusqu'à l'extrémité libre des éléments en forme de doigts (16, 16') et **en ce que** les éléments de flanc (26) souples sont reliés ensemble, de manière flexible, en direction longitudinale des éléments en forme de doigts (16, 16') respectivement par une multitude de tiges (27), de sorte que les extrémités libres (18) des éléments en forme de doigts (16, 16') peuvent être déplacées d'une position inférieure en une position supérieure et inversement.

6. Glissière selon la revendication 5, **caractérisée en ce que** les tiges (27) et les éléments de flanc (26) souples associés présentent respectivement un angle aigu α, de préférence entre 10° et 80°, et un angle obtus β, de préférence entre 100° et 170°.

7. Glissière selon la revendication 5 ou 6, **caractérisée en ce que** les éléments de flanc (26) souples des éléments en forme de doigts (16, 16') sont susceptibles de pouvoir être déplacés l'un par rapport à l'autre, respectivement notamment par un dispositif d'entraînement (24), en direction longitudinale des éléments en forme de doigts (16, 16'), de sorte que les éléments en forme de doigts (16, 16') sont plus ou moins courbés l'un par rapport à l'autre par un déplacement des éléments de flanc (26) souples.

8. Glissière selon l'une des revendications 1 à 7, **caractérisée en ce qu'**au moins un capteur (21), de préférence optique, est présent pour la saisie du nombre et/ou du type de certaines marchandises au détail stockées (2), de l'emplacement de certaines marchandises au détail stockées (2), des dimensions de certaines marchandises au détail stockées (2), de l'agencement d'un tas (25) de marchandises au détail stockées (2) et/ou de la forme d'un tas (25) de marchandises au détail stockées (2).

9. Glissière selon l'une des revendications 1 à 8, **caractérisée en ce que** l'on prévoit un dispositif de réglage (22) pour le déplacement de la hauteur des extrémités libres (18) des éléments en forme de doigts (16, 16') en fonction du temps, en fonction du nombre et/ou du type de certaines marchandises au détail stockées (2) et/ou en fonction d'au moins un paramètre détecté par le capteur (21).

10. Glissière selon l'une des revendications 1 à 9, **caractérisée en ce que** l'on prévoit au moins un élément en forme de main, en particulier à hauteur réglable, **en ce que** le au moins un élément en forme de main porte plusieurs éléments en forme de doigts (16, 16') à hauteur réglable l'un par rapport à l'autre et, en cas de besoin, **en ce que** le au moins un élément en forme de main est porté par un élément en forme de bras, de préférence à hauteur réglable.

11. Glissière selon l'une des revendications 1 à 10, **caractérisée en ce que** l'on prévoit sur l'extrémité inférieure de la glissière (4, 4') une zone de collecte (20) pour le stockage intermédiaire des marchandises au détail (2).

12. Procédé de transport des marchandises au détail (2), en particulier des colis et/ou des envois, le long d'une glissière (4, 4') selon l'une des revendications 1 à 11,
- lors duquel les marchandises au détail (2) sont temporairement stockées au niveau de l'extrémité inférieure de la glissière (4, 4'),
- lors duquel la hauteur des extrémités libres (18) d'au moins certains éléments en forme de doigts (16, 16'), pendant le stockage intermédiaire des marchandises au détail (2), est déplacée afin de mieux exploiter la largeur de la glissière (4, 4') pour le stockage des marchandises au détail (2), afin d'empiler l'une sur l'autre les marchandises au détail à stocker (2) et/ou afin de réduire la hauteur de chute des marchandises au détail (2) d'une section de fond de glissière (11, 11', 12, 12') vers la prochaine section de fond de glissière (12, 12', 13, 13').

13. Procédé selon la revendication 12, lors duquel la hauteur des extrémités libres (18) d'au moins certains éléments en forme de doigts (16, 16') peut être déplacée en hauteur en fonction du temps, en fonction du nombre et/ou du type de certaines marchandises au détail stockées (2), en fonction de l'emplacement de certaines marchandises au détail stockées (2), en fonction des dimensions de certaines marchandises au détail stockées (2), en fonction de l'agencement d'un tas (25) de marchandises au détail stockées (2) et/ou en fonction de la forme d'un tas (25) de marchandises au détail stockées (2).

14. Procédé selon la revendication 13, lors duquel le nombre et/ou le type de certaines marchandises au détail stockées (2), l'emplacement de certaines marchandises au détail stockées (2), les dimensions de certaines marchandises au détail stockées (2), l'agencement d'un tas (25) de marchandises au détail stockées (2) et/ou la forme d'un tas (25) de marchandises au détail stockées (2) est détecté(e)/sont détectées avec au moins un capteur (21), de préférence optique et, de préférence, lors duquel le au moins un capteur (21) transmet un signal (23) à un dispositif de réglage (22) pour le déplacement de la hauteur des extrémités libres (18) des éléments en forme de doigts (16, 16') en fonction du signal (23).
